# EUROPEAN PATENT APPLICATION

(11) **EP 4 799 723 A1**
(43) Date of publication of application: **02.09.2026**
(21) Application number: 24882443.5
(22) Date of filing: 24.10.2024
(51) Int. Cl.: B01J 20/283, B01J 20/281, B01J 20/282, B01J 20/284

(54) **STATIONARY PHASE FOR CHROMATOGRAPHY, METHOD FOR PRODUCING STATIONARY PHASE FOR CHROMATOGRAPHY, AND POLYMER HAVING AMINE-BASED SIDE CHAIN**

(30) Priority: 25.10.2023 JP 2023183229
(71) Applicant: Daicel Corporation, Osaka-shi, Osaka 530-0011 (JP); NATIONAL UNIVERSITY CORPORATION KYOTO INSTITUTE OF TECHNOLOGY, Kyoto-shi, Kyoto 606-8585 (JP)
(72) Inventor: IKEGAMI, Tohru, Kyoto-shi, Kyoto 606-8585 (JP); TSUBAKIHARA, Kento, Kyoto-shi, Kyoto 606-8585 (JP)
(74) Representative: Grünecker Patent- und Rechtsanwälte PartG mbB
(86) International application number: PCT/JP2024/037889
(87) International publication number: WO 2025/089332

(57) **Abstract**

A stationary phase for chromatography, wherein a polymer having an amine-based side chain is supported on a support, and the polymer having the amine-based side chain has one or more repeating units selected from a repeating unit represented by Formula (1) and a repeating unit represented by Formula (2), where R¹¹ and R²¹ represent a hydrogen atom or a methyl group; R¹², R¹³, R²², and R²³ represent saturated aliphatic hydrocarbon groups; Y¹ and Y² represent oxygen atoms, NH, or NCH₃; and n1 and n2 represent integers from 1 to 8.

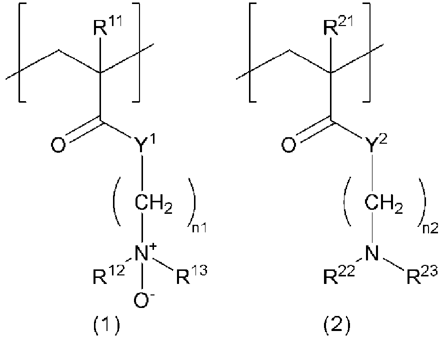

## Description

### TECHNICAL FIELD

The present disclosure relates to a stationary phase for chromatography, a method for producing a stationary phase for chromatography, and a polymer having an amine-based side chain.

### BACKGROUND ART

Chromatography is the most widely used method for separation and analysis of compounds, particularly organic compounds. This is a method for separating different substances using partition coefficients specific to the respective substances between a solid (stationary phase) spatially fixed in a tube called a column or a capillary and a fluid (mobile phase) moving through the voids in the solid.

In the field of life sciences, chromatography is indispensable for the separation and the analysis of, for example, saccharides, nucleic acids, nucleosides, peptides, and metabolites. These substances are often hydrophilic and highly polar, and are usually separated and analyzed by chromatography using a hydrophilic or highly polar stationary phase.

For example, Patent Document 1 discloses a method for separating and analyzing saccharides by hydrophilic interaction chromatography using a packing material having a primary amino group or a secondary amino group, each of which is a hydrophilic functional group.

### CITATION LIST

### PATENT DOCUMENT

Patent Document 1: JP 2017-116421 A

### SUMMARY OF INVENTION

### TECHNICAL PROBLEM

However, even when a typical hydrophilic stationary phase is used, separation may be difficult for some substances. Therefore, the development of a novel hydrophilic stationary phase is required to increase the degree of freedom in the selection of the stationary phase.

An object of the present disclosure is to provide a novel hydrophilic stationary phase for chromatography.

### SOLUTION TO PROBLEM

To solve the issues described above, the inventors of the present disclosure have conducted intensive studies. As a result, the present inventors have found that a novel stationary phase for chromatography exhibiting good hydrophilicity can be obtained by supporting a polymer having an amine-based side chain on a support. That is, the gist of the present disclosure is as described below.
[1] A stationary phase for chromatography, wherein
   a polymer having an amine-based side chain is supported on a support, and
   the polymer having the amine-based side chain has one or more repeating units selected from the group consisting of a repeating unit represented by Formula (1) and a repeating unit represented by Formula (2): 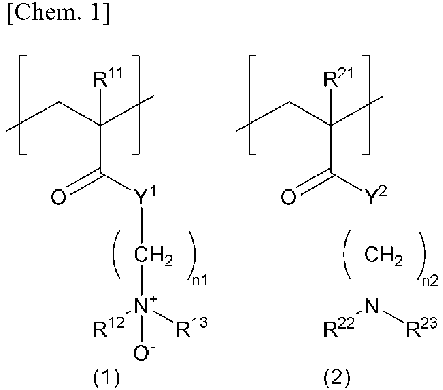
   where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.
[2] The stationary phase for chromatography according to [1], wherein
   the polymer having the amine-based side chain is supported on the support via a chemical bond.
[3] The stationary phase for chromatography according to [1] or [2], the stationary phase being used for hydrophilic interaction chromatography.
[4] The stationary phase for chromatography according to any one of [1] to [3], wherein the support is a porous inorganic support or non-porous inorganic support.
[5] A separation method including:
   separating a substance by hydrophilic interaction chromatography using the stationary phase for chromatography according to any one of [1] to [4].
[6] A method for producing a stationary phase for chromatography, the method including:
   any one of the following steps (a) to (h):
   (a) subjecting a monomer having an amine-based side chain to free radical polymerization in the presence of a support to which a polymerizable functional group is bonded;
   (b) subjecting a monomer having an amine-based side chain to chain transfer polymerization in the presence of a compound having a crosslinkable silyl group and a chain transfer functional group to yield a polymer having the crosslinkable silyl group and the amine-based side chain, and bonding the crosslinkable silyl group of the polymer to a functional group on a surface of a support;
   (c) polymerizing a monomer having an amine-based side chain and a silane coupling agent having a polymerizable functional group, and binding the obtained polymer to a support by a silane coupling reaction;
   (d) polymerizing a monomer having an amine-based side chain and a silane coupling agent having a polymerizable functional group in the presence of a support;
   (e) subjecting a monomer having an amine-based side chain to chain transfer polymerization in the presence of a support to which a chain transfer functional group is bonded;
   (f) radically polymerizing a monomer having an amine-based side chain in the presence of a support to which an atom transfer radical polymerization initiator group is bonded;
   (g) subjecting a monomer having an amine-based side chain to atom transfer radical polymerization in the presence of a compound having a crosslinkable silyl group and an atom transfer radical polymerization initiator group to yield a polymer having the crosslinkable silyl group and the amine-based side chain, and bonding the crosslinkable silyl group of the polymer to a functional group on a surface of a support; and
   (h) coating a surface of a support with a polymer having an amine-based side chain, wherein
      the monomer having the amine-based side chain in (a) to (g) is one or more selected from the group consisting of a monomer represented by Formula (3) and a monomer represented by Formula (4), and
      the polymer having the amine-based side chain in (h) has one or more repeating units selected from the group consisting of a repeating unit represented by Formula (1) and a repeating unit represented by Formula (2): 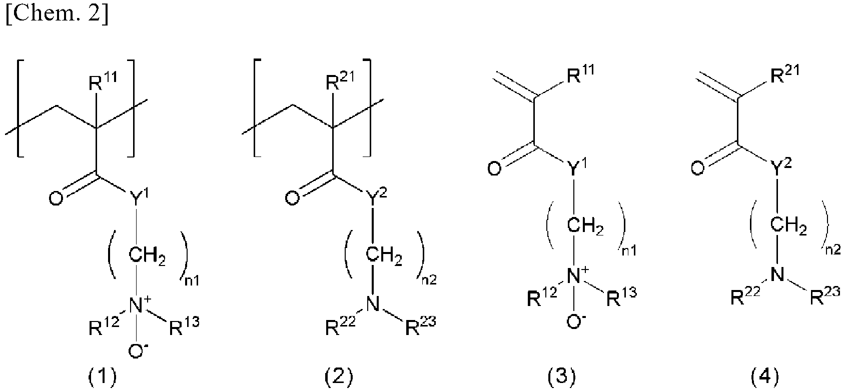
      where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.

   [7] The method for producing a stationary phase for chromatography according to [6], wherein the support is a porous inorganic support or non-porous inorganic support.
   [8] A polymer having an amine-based side chain, the polymer including:
      one or more repeating units selected from the group consisting of a repeating unit represented by Formula (1) and a repeating unit represented by Formula (2): 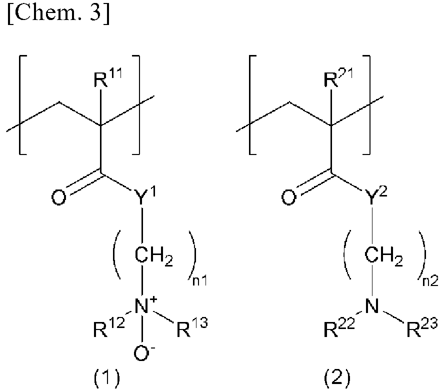
      where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.
   [9] The polymer having the amine-based side chain according to [8], the polymer being used for a stationary phase for chromatography.
   [10] A method for producing a polymer having an amine-based side chain, the method including:
      subjecting a monomer having an amine-based side chain to polymerization, wherein
      the monomer having the amine-based side chain is one or more selected from the group consisting of a monomer represented by Formula (3) and a monomer represented by Formula (4): 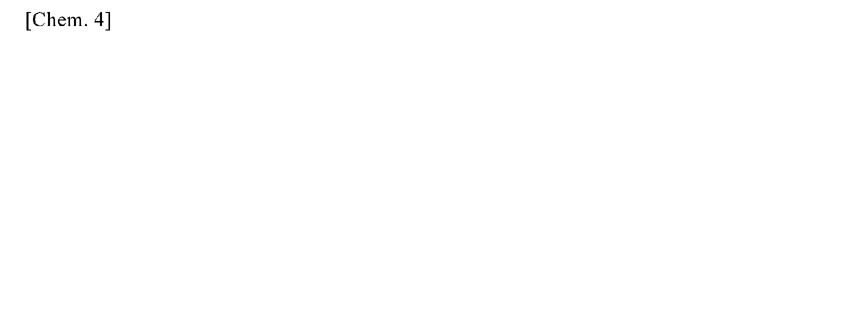 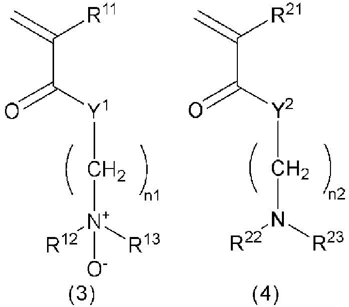
      where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.
   [11] The method for producing a polymer having an amine-based side chain according to [10], wherein
      the polymerization is atom transfer radical polymerization, free radical polymerization, or chain transfer polymerization.

### ADVANTAGEOUS EFFECTS OF INVENTION

According to the present disclosure, it is possible to achieve an effect that a novel hydrophilic stationary phase for chromatography can be provided.

Further, the problems and effects of the present disclosure are not limited to those specifically described above and also include those obvious to a person skilled in the art based on the entire specification.

### BRIEF DESCRIPTION OF DRAWINGS

[FIG. 1] FIG. 1 is a graph plotted with α(Tb/Tp) on the vertical axis and α(U/2dU) on the horizontal axis for stationary phases for chromatography of Examples.
[FIG. 2] FIG. 2 is a graph plotted with α(U/5FU) on the vertical axis and α(2'dU/2'd5FU) on the horizontal axis for the stationary phases for chromatography of Examples.
[FIG. 3] FIG. 3 is a graph plotted with α(5FU/2'd5FU) on the vertical axis and α(U/2'dU) on the horizontal axis for the stationary phases for chromatography of Examples.
[FIG. 4] FIG. 4 is a graph plotted with α(U/2'dU) on the vertical axis and α(I/isol) on the horizontal axis for the stationary phases for chromatography of Examples.

### DESCRIPTION OF EMBODIMENTS

The present disclosure will be described in detail below with reference to specific embodiments. However, the respective configurations in the respective embodiments, combinations thereof, and the like are merely examples, and addition, omission, substitution, and the other changes of the configurations may be made as appropriate within a scope that does not depart from the spirit of the present disclosure. The present disclosure is not limited to the embodiments.

Also, each aspect disclosed in the present specification can be combined with any other feature disclosed herein.

Note that, in the present disclosure, "from X to Y" when a range is indicated means "X or more and Y or less". Furthermore, in the case where a numerical range represented by "from X to Y", or "X or more and Y or less" is described stepwise (e.g., in order of preference), the upper limit and the lower limit of each numerical range can be optionally combined.

In the present disclosure, a description such as a description of "one or more selected from the group consisting of X, Y, and Z" means any of X, Y, Z, a combination of X and Y, a combination of X and Z, a combination of Y and Z, or a combination of X, Y, and Z.

In the present disclosure, the description such as a description of "X such as x1, x2, and x3" refers to x1, x2, and x3 as examples of X, and does not mean that X is limited to x1, x2, and x3.

### 1. Stationary Phase for Chromatography

A first embodiment of the present disclosure is a stationary phase for chromatography (hereinafter, also simply referred to as "stationary phase") in which a polymer having an amine-based side chain is supported on a support.

The stationary phase according to the present embodiment exhibits high hydrophilicity by having a specific amine-based side chain. Therefore, the stationary phase according to the present embodiment has a strong interaction with a hydrophilic substance and a polar substance and can retain these substances well, and thus, can exhibit high separation performance for the hydrophilic substance and the polar substance.

### 1-1. Support

The support supporting the polymer having the amine-based side chain may be a non-porous support or a porous support, but is preferably a porous support.

In the present disclosure, the porous support means a support in which pores are formed throughout the support, and includes a superficially porous support (so-called core-shell support) having a structure in which a non-porous core is covered with a porous layer.

When the support is the porous support, the average pore size of the support is not particularly limited, but is preferably from 1 nm to 1000 nm, more preferably from 5 nm to 500 nm, and further preferably from 10 nm to 100 nm.

The average pore size of the support is measured in accordance with JIS Z 8831-2:2010 (Pore size distribution and porosity of solid materials - Part 2: Analysis of mesopores and macropores by gas adsorption; established on Apr. 20, 2010).

When the support is the porous support, the specific surface area of the support is not particularly limited, but is preferably from 5 m²/g to 1000 m²/g, and more preferably from 10 m²/g to 500 m²/g.

When the support is the non-porous support, the specific surface area of the support is not particularly limited, but is preferably 0.005 m²/g or more and less than 5 m²/g, and more preferably from 0.01 m²/g to 4 m²/g.

The specific surface area of the support is measured by a BET multipoint method using nitrogen gas in accordance with JIS Z 8830:2013 (Determination of the specific surface area of powders (solids) by gas adsorption; established on Jul. 1, 1990; revised on Jan. 21, 2013).

The form of the support is not particularly limited, and examples thereof include a particle, a membrane, and a porous cylindrical body (monolith) housed in a column tube in a liquid-tight manner. From the viewpoint of achieving uniform separation performance, the form of the support is preferably a particle, and in particular, the form of the support is preferably a spherical particle.

In the present disclosure, spherical includes not only a true spherical form, but also forms having circular, substantially circular, elliptical, or substantially elliptical cross-sections, such as a prolate spheroid and an oblate spheroid. More specifically, when the aspect ratio of the support is 2.0 or less, the form is regarded as spherical. The aspect ratio of the spherical support is preferably 1.5 or less.

Note that the aspect ratio of the support is measured by the following method. The support is observed from directly above using an electron microscope or an optical microscope in a state in which the support is randomly dispersed on a stage. In any field of view in which 10 or more independent primary particles (i.e., primary particles that are not in contact with or overlapping with any other particles) are observed, the major axis and the minor axis (the length of the longest portion perpendicular to the major axis) of each independent primary particle in the field of view are determined, and the ratio of the major axis and the minor axis is regarded as the aspect ratio of each of the particles. The arithmetic mean of the aspect ratios of all the independent primary particles in the field of view is regarded as the aspect ratio of the support. Here, primary particles refer to particles in which the interfaces between particles are clearly observable. The observation is generally carried out after suitable dispersion on a sample stage so as to avoid overlapping of the primary particles. However, it is difficult to avoid the incidental overlap, and bulk particles formed by the agglomeration of a plurality of primary particles are present. These instances are excluded from the object to be observed.

When the support is a particle, the particle size of the particle is not particularly limited, but is preferably from 0.1 µm to 50.0 µm, more preferably from 1.0 µm to 40.0 µm, still more preferably from 1.0 µm to 30.0 µm, and particularly preferably from 1.0 µm to 10.0 µm.

When the particles are spherical particles, the particle size of the support means a median particle size corresponding to a 50% cumulative value, that is, a volume-based 50% cumulative particle size (D₅₀), in the cumulative volume distribution curve as measured by a laser diffraction-scattering particle size distribution analyzer.

When the particle is an irregular particle, the particle size of the support is represented by the diameter of a sphere having the same volume as that of the particle. In this case, the particle size of the support is measured with an apparatus that carries out measurement using microscopic images, such as the "Mastersizer 2000E" available from Malvern Instruments Ltd.

When the support is a particle, the form of the stationary phase is also particulate. Generally, when a polymer is supported on a support, the BET specific surface area shows no change exceeding the measurement error before and after the supporting. Therefore, when the support is a particle, the particle size of the stationary phase can be regarded as being substantially the same as the particle size of the support. In other words, the range of the particle size of the stationary phase, including the preferred range thereof, is the same as the range described above for the particle size of the support.

Examples of the material of the support include an organic material, an inorganic material, and an organic-inorganic hybrid material. Hereinafter, the support composed of the organic material, the support composed of the inorganic material, and the support composed of the organic-inorganic hybrid material are referred to as an organic support, an inorganic support, and an organic-inorganic hybrid support, respectively.

Examples of the organic material forming the organic support include polystyrene, poly(meth)acrylamide, and poly(meth)acrylate.

Examples of the inorganic material forming the inorganic support include silica gel, alumina, zirconia, titania, magnesia, glass, kaolin, silicate, and hydroxyapatite. The inorganic material is preferably silica gel, alumina, or glass, and more preferably, silica gel.

Examples of the organic-inorganic hybrid support include an organic-inorganic hybrid support formed by a sol-gel reaction between an alkoxysilane and an alkyl-substituted or alkylene-substituted alkoxysilane compound.

The support is preferably a porous inorganic support or a porous inorganic support, more preferably a porous inorganic particle or a porous inorganic particle, further preferably a porous inorganic particle, and particularly preferably a porous silica gel particle.

### 1-2. Polymer Having Amine-Based Side Chain

In the present embodiment, the polymer having the amine-based side chain supported on the support has one or more repeating units selected from the group consisting of a repeating unit represented by Formula (1) and a repeating unit represented by Formula (2). In other words, the amine-based side chain in the polymer having the amine-based side chain refers to a side chain containing a tertiary amine-N-oxide group (hereinafter, also simply referred to as "N-oxide group") in Formula (1) and a side chain containing a tertiary amino group in Formula (2). The polymer having the amine-based side chain preferably has at least the repeating unit represented by Formula (1).

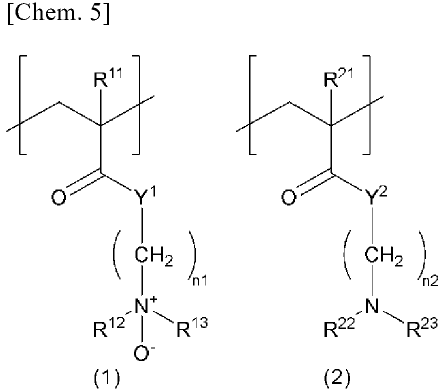

In Formula (1) and Formula (2), R¹¹ and R²¹ each represent a hydrogen atom or a methyl group, and preferably, R¹¹ and R²¹ are each a hydrogen atom.

In Formula (1) and Formula (2), R¹², R¹³, R²², and R²³ each represent a saturated aliphatic hydrocarbon group. Note that, in the present disclosure, the saturated aliphatic hydrocarbon group may be linear, branched, or cyclic.

The number of carbons in the aliphatic hydrocarbon group is not particularly limited, but is preferably from 1 to 8, more preferably from 1 to 4, even more preferably from 1 to 3, and particularly preferably 1.

Specific examples of the aliphatic hydrocarbon group include alkyl groups such as a methyl group, an ethyl group, an n-propyl group, an isopropyl group, an n-butyl group, a sec-butyl group, a tert-butyl group, an isobutyl group, an n-pentyl group, an isopentyl group, a neopentyl group, an n-hexyl group, an n-heptyl group, an n-octyl group, and a 2-ethylhexyl group; and cycloalkyl groups such as a cyclopropyl group, a cyclobutyl group, a cyclopentyl group, a cyclohexyl group, and a 3,5-dimethylhexyl group. The aliphatic hydrocarbon group is preferably an alkyl group.

R¹² and R¹³ are preferably the same group. R²² and R²³ are preferably the same group.

In Formula (1) and Formula (2), Y¹ and Y² each represent an oxygen atom, NH, or NCH₃, and preferably, Y¹ and Y² are each an oxygen atom or NH.

In Formula (1) and Formula (2), n1 and n2 each represent an integer from 1 to 8, preferably an integer from 1 to 6, more preferably an integer from 1 to 4, and still more preferably an integer from 2 to 3.

Specific examples of the repeating unit represented by Formula (1) and the repeating unit represented by Formula (2) include the following repeating units.

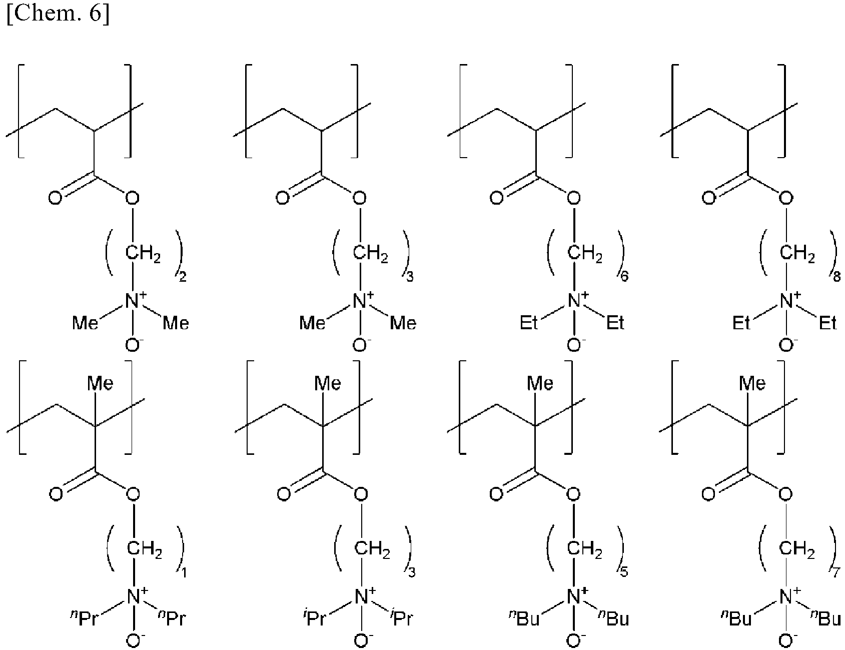

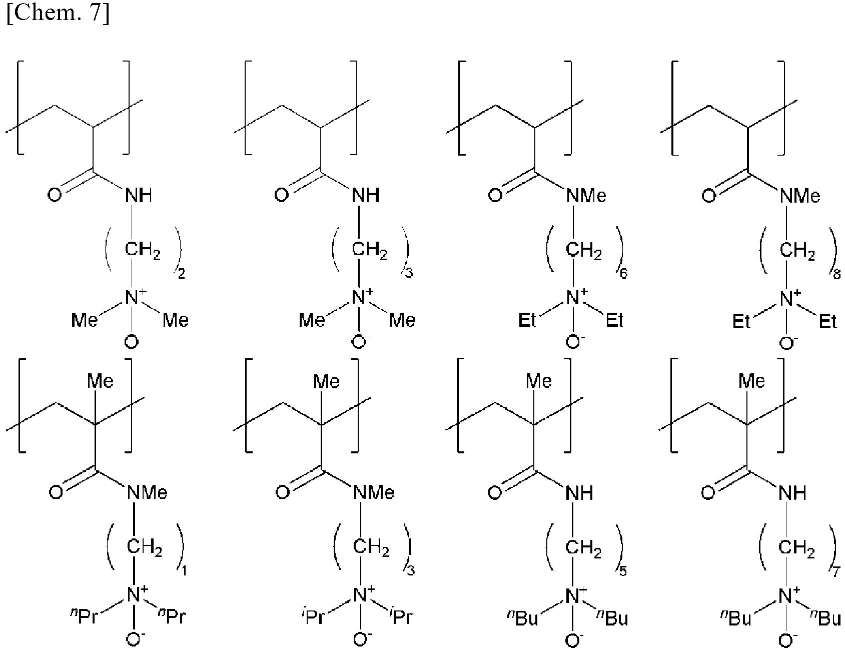

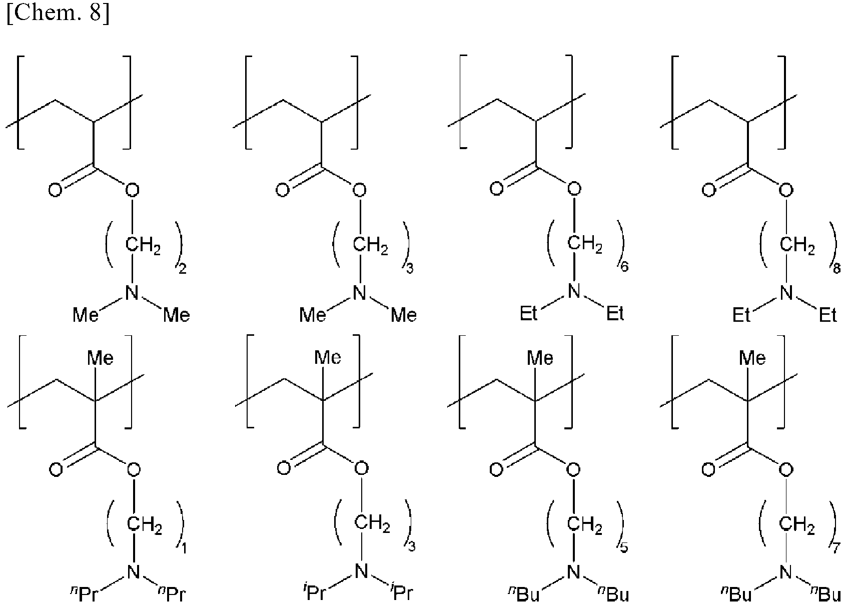

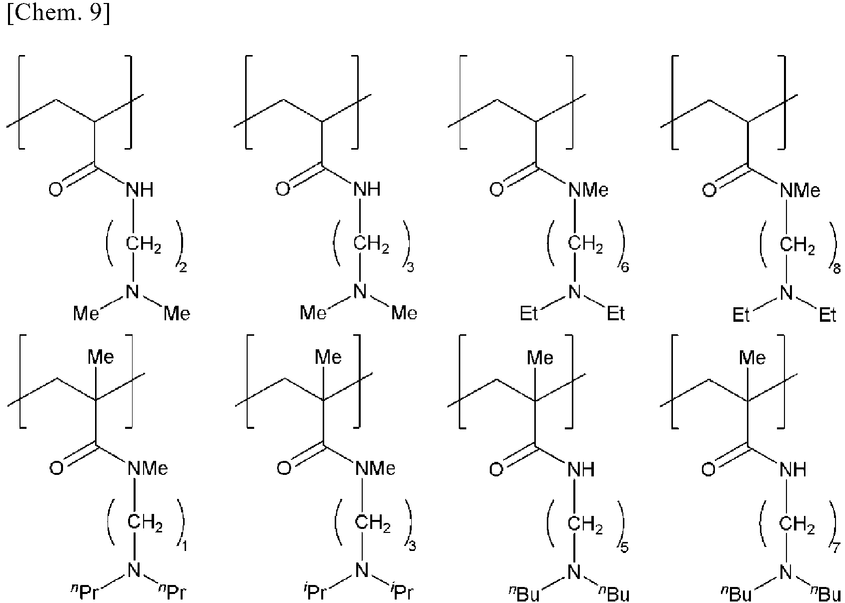

The polymer having the amine-based side chain may contain an additional repeating unit besides the repeating unit represented by Formula (1) and the repeating unit represented by Formula (2), within a range not inhibiting the effects of the present disclosure. The additional repeating unit is not particularly limited, and however, examples thereof include a repeating unit derived from a support to which a polymerizable functional group is bonded, as used in a step (a) described below; a repeating unit derived from a silane coupling agent having a polymerizable functional group, as used in a step (c) and a step (d) described below; and a repeating unit derived from any one of polymerizable compounds such as a styrene compound and an olefin compound.

While in the polymer having the amine-based side chain, the total content of one or more repeating units selected from the group consisting of the repeating unit represented by Formula (1) and the repeating unit represented by Formula (2) is not particularly limited as long as the effects of the present disclosure are obtained, the total content is preferably from 80 mol% to 100 mol%, more preferably from 90 mol% to 100 mol%, and still more preferably from 95 mol% to 100 mol%, from the viewpoint of more effectively exhibiting separation characteristics attributable to the polymer having the amine-based side chain.

The mode of supporting the polymer having the amine-based side chain on the support is not particularly limited, and however, preferred examples thereof include a mode in which the polymer having the amine-based side chain is supported on the support via a chemical bond, and a mode in which the polymer having the amine-based side chain is physically adsorbed (coated) on the support. More preferably, the polymer having the amine-based side chain is supported on the support via a chemical bond. This can further improve the separation performance of the stationary phase. In addition, in this way, even when a good solvent for the polymer having the amine-based side chain is contained in the mobile phase in separation by chromatography, the polymer having the amine-based side chain can be prevented from being dissolved in the solvent of the mobile phase and removed from the stationary phase, and thus, the functional deterioration of the stationary phase can be suppressed.

The method for synthesizing (producing) the polymer having the amine-based side chain is selected depending on the mode of the supporting. When the stationary phase according to the present embodiment is a stationary phase in which the polymer having the amine-based side chain is supported on the support via a chemical bond, the stationary phase according to the present embodiment can be produced by a method including any one of the following steps (a) to (h). When the stationary phase is produced by a method including the step (a), the step (d), the step (e), or the step (f), the synthesis of the polymer having the amine-based side chain and the supporting of the polymer having the amine-based side chain on the support occur in parallel. On the other hand, when the stationary phase is produced by a method including the step (b), the step (c), or the step (g), the polymer having the amine-based side chain is supported on the support via a chemical bond, after being synthesized once. On the other hand, when the stationary phase according to the present embodiment is a stationary phase in which the polymer having the amine-based side chain is physically adsorbed on the support, the stationary phase according to the present embodiment can be produced by a method including the following step (h).
(a) subjecting a monomer having an amine-based side chain to free radical polymerization in the presence of a support to which a polymerizable functional group is bonded;
(b) subjecting a monomer having an amine-based side chain to chain transfer polymerization in the presence of a compound having a crosslinkable silyl group and a chain transfer functional group to yield a polymer having the crosslinkable silyl group and the amine-based side chain, and bonding the crosslinkable silyl group of the polymer to a functional group on a surface of a support;
(c) polymerizing a monomer having an amine-based side chain and a silane coupling agent having a polymerizable functional group, and binding the obtained polymer to a support by a silane coupling reaction;
(d) polymerizing a monomer having an amine-based side chain and a silane coupling agent having a polymerizable functional group in the presence of a support;
(e) subjecting a monomer having an amine-based side chain to chain transfer polymerization in the presence of a support to which a chain transfer functional group is bonded;
(f) radically polymerizing a monomer having an amine-based side chain in the presence of a support to which an atom transfer radical polymerization initiator group is bonded;
(g) subjecting a monomer having an amine-based side chain to atom transfer radical polymerization in the presence of a compound having a crosslinkable silyl group and an atom transfer radical polymerization initiator group to yield a polymer having the crosslinkable silyl group and the amine-based side chain, and bonding the crosslinkable silyl group of the polymer to a functional group on a surface of a support; and
(h) coating a surface of a support with a polymer having an amine-based side chain, wherein
   the monomer having the amine-based side chain in (a) to (g) is one or more selected from the group consisting of a monomer represented by Formula (3) and a monomer represented by Formula (4), and
   the polymer having the amine-based side chain in (h) has one or more repeating units selected from the group consisting of a repeating unit represented by Formula (1) and a repeating unit represented by Formula (2).

Note that, in any of these methods, it is also possible to control the stereoregularity of the polymer having the amine-based side chain by selecting, for example, the polymerization temperature, a polymerization solvent, and an additive during polymerization.

Next, the step (a) will be described.

Examples of the polymerizable functional group of the support to which the polymerizable functional group is bonded, as used in the step (a), include a vinyl group, an allyl group, an isopropenyl group, and a group having an ethylenically unsaturated bond such as an alkenyl group having from 4 to 12 carbons and having a double bond at the ω-position, and the polymerizable functional group is preferably a vinyl group, an allyl group, or an isopropenyl group.

When a porous silica gel or a non-porous silica gel (hereinafter, also simply referred to as "silica gel" as a concept including both of the porous silica gel and the non-porous silica gel) is used as the support, the polymerizable functional group is chemically bonded to the support via a silanol group in the silica gel.

When a support other than silica gel is used, surface treatment of the support is carried out, and thus, excess adsorption of a substance to be separated onto the support itself can be suppressed. Further, the polymerizable functional group can be chemically bonded to the support via a group introduced in the surface treatment. Examples of a surface treatment agent include silane coupling agents, such as 3-aminopropyltrimethoxysilane; titanate coupling agents; and aluminate coupling agents.

The support to which the polymerizable functional group is bonded is obtained by, for example, a silane coupling reaction between a compound represented by Formula (I) and the support, which is preferably silica gel.

W-X-Y-SiR₃₋ₙZₙ (I)

In Formula (I), W represents a polymerizable functional group (radically polymerizable functional group). The polymerizable functional group is preferably a group having an ethylenically unsaturated bond, more preferably a vinyl group, an allyl group, an isopropenyl group, or an alkenyl having from 4 to 12 carbons and having a double bond at the ω-position, and still more preferably a vinyl group, an allyl group, or an isopropenyl group.

In Formula (I), X represents an amide group, an ester group, an N-alkylamide group having from 1 to 3 carbons, an ether group, a sulfoxide group, a sulfone group, a sulfide group, or a phosphate group. X is preferably an amide group, an N-alkylamide group having from 1 to 3 carbons, or an ester group.

In Formula (I), Y represents an alkylene group having from 1 to 30 carbons. Y is preferably an alkylene group having from 1 to 10 carbons, and more preferably an alkylene group having from 1 to 5 carbons, and still more preferably a methylene group, an ethylene group, or a trimethylene group.

In Formula (I), each R independently represents an alkyl group having from 1 to 5 carbons. R is preferably an alkyl group having from 1 to 3 carbons, more preferably a methyl group, an ethyl group, or an n-propyl group, and still more preferably a methyl group or an ethyl group.

In Formula (I), each Z independently represents an alkoxy group having from 1 to 5 carbons, a halogen atom, an alkylthio group having from 1 to 20 carbons, an amino group, or an allyl-based group having from 1 to 5 carbons. Examples of the alkoxy group having from 1 to 5 carbons include a methoxy group and an ethoxy group. Examples of the halogen atom include a chlorine atom, a bromine atom, and an iodine atom. Examples of the alkylthio group having from 1 to 20 include a methylthio group and an ethylthio group. Examples of the amino group include a dimethylamino group, a diethylamino group, a pyrrolidino group, and an imidazolyl group. Examples of the allyl-based group having from 1 to 5 carbons include an alkyl-substituted or unsubstituted allyl group, for example, an allyl group and a 2-methyl-2-propenyl group. Z is preferably an alkoxy group having from 1 to 5 carbons, and more preferably a methoxy group or an ethoxy group, from the viewpoint of a good balance between ease of handling and reactivity.

In Formula (I), n represents an integer from 1 to 3. n is preferably 3.

The compound represented by Formula (I) may be commercially available, but can be also produced by reacting a compound having W with a compound having a group represented by -Y-SiR₃₋ₙZₙ. Note that the "-X-" in Formula (I) is formed by the reaction between these compounds.

Examples of the compound having W include acrylic acid in which the hydrogen on the carbon bonded to the vinyl group is optionally substituted with an alkyl group having from 1 to 12 carbons; and a halide thereof.

Examples of the compound having a group represented by -Y-SiR₃₋ₙZₙ include a silane coupling agent having an alkoxy group having from 1 to 5 carbons as Z.

The support to which the polymerizable functional group is bonded is preferably a surface-modified silica gel obtained by a silane coupling reaction between the compound represented by Formula (I) and silica gel.

When a polymer having an amine-based side chain is supported on the support by the step (a), the polymer having the amine-based side chain is produced by subjecting a polymerizable functional group of the monomer having the amine-based side chain and a polymerizable functional group bonded to the support to free radical polymerization. As the reaction conditions of the free radical polymerization, any conditions can be adopted, such as conditions known in the field of polymer synthesis, and conditions equivalent thereto.

The monomer having the amine-based side chain is one or more selected from the group consisting of a monomer represented by Formula (3) and a monomer represented by Formula (4). From the monomer represented by Formula (3) and the monomer represented by Formula (4), the repeating unit represented by Formula (1) and the repeating unit represented by Formula (2) are produced, respectively.

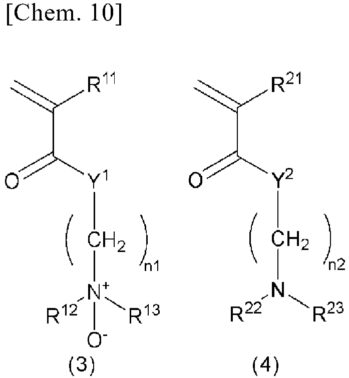

In Formula (3), R¹¹, R¹², R¹³, Y¹, and n1 are synonymous with R¹¹, R¹², R¹³, Y¹, and n1 in Formula (1), respectively, and the same applies also to preferred embodiments thereof.

In Formula (4), R²¹, R²², R²³, Y², and n2 are synonymous with R²¹, R²², R²³, Y², and n2 in Formula (2), respectively, and the same applies also to preferred embodiments thereof.

The free radical polymerization is preferably carried out in the presence of a catalytic amount of a radical generator. As the radical generator, any of a known radical generator, a radical generator equivalent thereto, and the like can be adopted. Examples of the known radical generator include azo compounds and peroxides.

A structure presumed as a preferred embodiment of the stationary phase obtained by supporting the polymer having the amine-based side chain on the support in the step (a) is shown in Formula (II). The polymer in Formula (II) may be a block copolymer or a random copolymer.

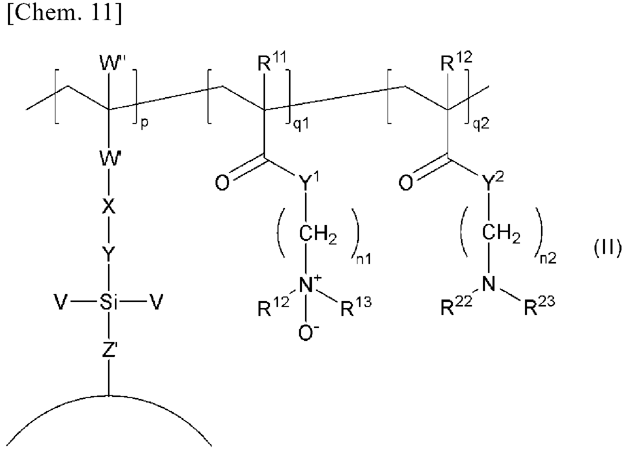

In Formula (II), W' and W" each represent a group produced by polymerization of W, which is a polymerizable functional group in Formula (I). Specific examples of W' include a single bond and an alkylene group having from 1 to 10 carbons, and preferably, W' is a single bond or a methylene group. Specific examples of W" include a hydrogen atom or a methyl group.

In Formula (II), X and Y are synonymous with X and Y in Formula (I), respectively, and the same applies also to preferred embodiments thereof.

In Formula (II), Z' represents a linking group or a single bond formed between the silicon atom in Formula (I) and the support by a silane coupling reaction. For example, when Z in Formula (I) is an alkoxy group having from 1 to 5 carbons and the support is silica gel, Z' is -O-.

In Formula (II), V is a group bonded to the support through Z, R, or Z', or a group formed by coupling between the compounds represented by Formula (I). Z and R are synonymous with Z and R in Formula (I), respectively, and the same applies also to preferred embodiments thereof. Note that, when V is a group formed by coupling between the compounds represented by Formula (I), n in Formula (I) is 2 or 3.

In Formula (II), when n is equal to 1, V is equal to R; and when n is equal to 2, the total percentage of unreacted Z and R to the total number of V is from 5% to 100%; and when n is equal to 3, the percentage of unreacted Z to the total number of V is from 0% to 100%.

In Formula (II), R¹¹, R¹², R¹³, Y¹, and n1 are synonymous with R¹¹, R¹², R¹³, Y¹, and n1 in Formula (1), respectively, and the same applies also to preferred embodiments thereof.

In Formula (II), R²¹, R²², R²³, Y², and n2 are synonymous with R²¹, R²², R²³, Y², and n2 in Formula (2), respectively, and the same applies also to preferred embodiments thereof.

In Formula (II), p represents from 1 to 10. p is preferably from 1 to 5.

In Formula (II), q1, q2, and the sum of q1 and q2 each represent from 10 to 3000. Each of q1, q2, and the sum of q1 and q2 is preferably from 15 to 2500, and more preferably from 20 to 2000. At least one of q1 and q2 may be 0.

Next, the step (b) will be described.

Examples of the compound having a crosslinkable silyl group and a chain transfer functional group used in the step (b) include compounds represented by Formula (III). The crosslinkable silyl group is a group that can undergo, for example, a homocoupling reaction and a reaction with a functional group on the surface of the support, depending on reaction conditions. In Formula (III), the crosslinkable silyl group is a silyl group represented by - SiR₃₋ₙZₙ.

T-Y-SiR₃₋ₙZₙ (III)

In Formula (III), T is a chain transfer functional group. The chain transfer functional group refers to a functional group which, in a radical polymerization reaction, leads vigorously to a chain transfer reaction accompanied by transfer of a propagating active species and a re-initiation reaction. The presence of the chain transfer functional group enables, to some extent, control of the molecular weight and the terminal structure of the polymer having the amine-based side chain. Preferred examples of the chain transfer functional group include a halogenated alkyl group having from 1 to 12 carbons, an alkyl group having from 1 to 12 carbons and having a thiol group at the end, and an alkyl group having from 1 to 12 carbons and having therein a disulfide group. Examples of the halogen of the halogenated alkyl group having from 1 to 12 carbons include chlorine, bromine, and iodine. The halogenated alkyl group having from 1 to 12 carbons is preferably a halogenated alkyl group having from 1 to 3 carbons.

In Formula (II), Y, R, Z, and n are synonymous with Y, R, Z, and n in Formula (I), respectively, and the same applies also to preferred embodiments thereof.

The monomer having the amine-based side chain used in the step (b) is the same as the monomer having the amine-based side chain used in the step (a), that is, one or more selected from the group consisting of the monomer represented by Formula (3) and the monomer represented by Formula (4).

The chain transfer polymerization is preferably carried out in the presence of a catalytic amount of a radical generator. As the radical generator, any of a known radical generator, a radical generator equivalent thereto, and the like can be adopted. Examples of the known radical generator include azo compounds and peroxides. Here, it is possible to control the molecular weight to some extent, from the molar ratio of a chain transfer agent to the monomer.

By subjecting the monomer having the amine-based side chain to chain transfer polymerization in the presence of the compound having a crosslinkable silyl group and a chain transfer functional group, the polymer represented by Formula (IV), that is, the polymer having the crosslinkable silyl group and the amine-based side chain can be obtained. This polymer has a crosslinkable silyl group at the end as shown in Formula (IV).

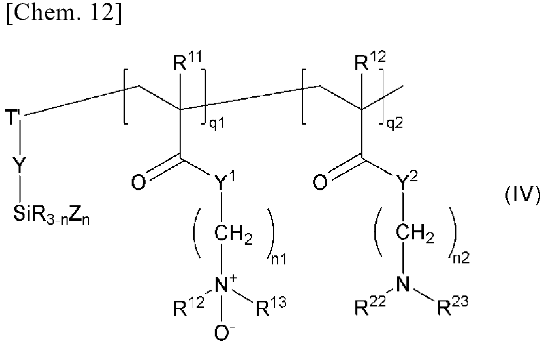

In Formula (IV), T' represents a group derived from T in Formula (III). In other words, T' is the residue of T formed by chain transfer polymerization. For example, when T is a 12-mercaptododecyl group, -T'-Y-SiR₃₋ₙZₙ is -SC₁₂H₂₄-Y-SiR₃₋ₙZₙ.

In Formula (IV), Y, R, Z, and n are synonymous with Y, R, Z, and n in Formula (III), respectively, and the same applies also to preferred embodiments thereof.

In Formula (IV), R¹¹, R¹², R¹³, Y¹, and n1 are synonymous with R¹¹, R¹², R¹³, Y¹, and n1 in Formula (1), respectively, and the same applies also to preferred embodiments thereof.

In Formula (IV), R²¹, R²², R²³, Y², and n2 are synonymous with R²¹, R²², R²³, Y², and n2 in Formula (2), respectively, and the same applies also to preferred embodiments thereof.

In Formula (IV), q1, q2, and the sum of q1 and q2 each represent from 10 to 3000. Each of q1, q2, and the sum of q1 and q2 is preferably from 15 to 2500, and more preferably from 20 to 2000. At least one of q1 and q2 may be 0.

As a method for bonding the crosslinkable silyl group of the polymer having a crosslinkable silyl group and an amine-based side chain to the functional group on the surface of the support, a silane coupling reaction can be adopted. As the silane coupling reaction, a known reaction may be adopted, or any reaction equivalent thereto may be adopted.

A structure presumed as a preferred embodiment of the stationary phase obtained by supporting the polymer having the amine-based side chain on the support in the step (b) is shown in Formula (V).

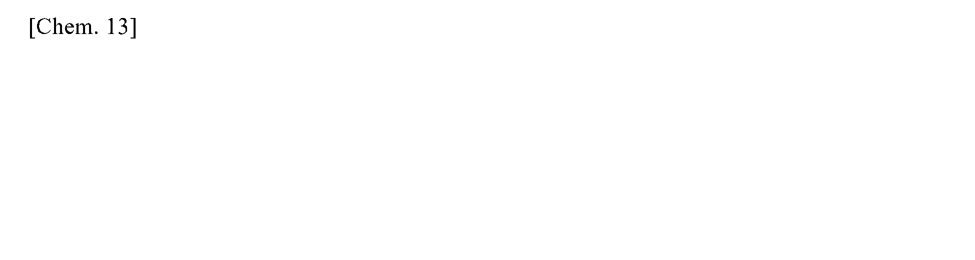

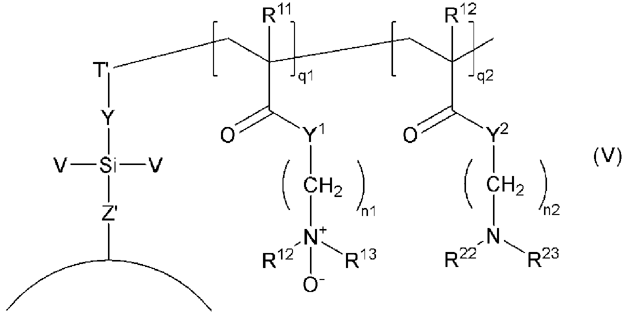

In Formula (V), Z' and V are synonymous with Z' and V in Formula (II), respectively.

In Formula (V), Y, T', R¹¹, R¹², R¹³, Y¹, n1, R²¹, R²², R²³, Y², n2, q1, q2, and the sum of q1 and q2 are synonymous with Y, T', R¹¹, R¹², R¹³, Y¹, n1, R²¹, R²², R²³, Y², n2, q1, q2, and the sum of q1 and q2, respectively, and the same applies also to preferred embodiments thereof.

Next, the step (c) will be described.

Examples of the silane coupling agent having a polymerizable functional group used in the step (c) preferably include the compound represented by Formula (I). Even when the compound represented by Formula (I) is used in the step (c), the preferred embodiment thereof is the same as that used in the step (a).

The monomer having the amine-based side chain used in the step (c) is the same as the monomer having the amine-based side chain used in the step (a), that is, one or more selected from the group consisting of the monomer represented by Formula (3) and the monomer represented by Formula (4).

The method for polymerizing the monomer having the amine-based side chain and the silane coupling agent having a polymerizable functional group is not particularly limited, and any polymerization method can be adopted. However, radical polymerization is preferable, and living radical polymerization is more preferable. The radical polymerization is preferably carried out in the presence of a catalytic amount of a radical generator. As the radical generator, any of a known radical generator, a radical generator equivalent thereto, and the like can be adopted. Examples of the known radical generator include azo compounds and peroxides. In addition, the polymerization is preferably carried out in the presence of a chain transfer agent, from the viewpoint of facilitating the control of the molecular weight of the polymer having the amine-based side chain.

As a method for bonding the resulting polymer (i.e., polymer having an amine-based side chain) to the support by a silane coupling reaction, any method, such as a known silane coupling reaction and a reaction equivalent thereto, can be used.

A structure presumed as a preferred embodiment of the stationary phase obtained by supporting the polymer having the amine-based side chain on the support in the step (c) is shown in Formula (II).

Next, the step (d) will be described.

Examples of the silane coupling agent having a polymerizable functional group used in the step (d) preferably include the compound represented by Formula (I). Even when the compound represented by Formula (I) is used in the step (d), the preferred embodiment thereof is the same as that used in the step (a).

The monomer having the amine-based side chain used in the step (d) is the same as the monomer having the amine-based side chain used in the step (a), that is, one or more selected from the group consisting of the monomer represented by Formula (3) and the monomer represented by Formula (4).

When the monomer having the amine-based side chain and the silane coupling agent having a polymerizable functional group are polymerized in the presence of the support, the method for the polymerization is not particularly limited; any polymerization method can be adopted, and however, free radical polymerization is preferable. The free radical polymerization is preferably carried out in the presence of a catalytic amount of a radical generator. As the radical generator, any of a known radical generator, a radical generator equivalent thereto, and the like can be adopted. Examples of the known radical generator include azo compounds and peroxides.

A structure presumed as a preferred embodiment of the stationary phase obtained by supporting the polymer having the amine-based side chain on the support in the step (d) is shown in Formula (II).

Next, the step (e) will be described.

As the chain transfer functional group introduced (chemically bonded) to the surface of the support, as used in the step (e), the same group as the chain transfer functional group of the compound having a crosslinkable silyl group and a chain transfer functional group used in the step (b) can be adopted. Therefore, examples of the support having the surface onto which a chain transfer functional group is introduced preferably include a support in which the compound represented by Formula (III) is bonded to the support by a silane coupling reaction.

The monomer having the amine-based side chain used in the step (e) is the same as the monomer having the amine-based side chain used in the step (a), that is, one or more selected from the group consisting of the monomer represented by Formula (3) and the monomer represented by Formula (4).

The chain transfer polymerization is preferably carried out in the presence of a catalytic amount of a radical generator. As the radical generator, any of a known radical generator, a radical generator equivalent thereto, and the like can be adopted. Examples of the known radical generator include azo compounds and peroxides. Here, it is possible to control the molecular weight to some extent, from the molar ratio of a chain transfer agent to the monomer.

A structure presumed as a preferred embodiment of the stationary phase obtained by supporting the polymer having the amine-based side chain on the support in the step (e) is shown in Formula (V).

Next, the step (f) will be described.

Examples of the atom transfer radical polymerization initiator group of the support to which an atom transfer radical polymerization initiator group is bonded, as used in the step (f), preferably include an α-haloalkylcarbonyl group. Examples of the α-haloalkylcarbonyl group include an α-bromoisobutyryl group, an α-bromopropionyl group, a bromoacetyl group, and a chloroacetyl group, and an α-bromoisobutyryl group is preferable.

When silica gel is used as the support, the atom transfer radical polymerization initiator group is chemically bonded to the support via a silanol group of the silica gel.

When a support other than silica gel is used, surface treatment of the support is carried out, and thus, excess adsorption of a substance to be separated onto the support itself can be suppressed. Further, the support can be chemically bonded to the atom transfer radical polymerization initiator group via a group introduced in the surface treatment. Examples of a surface treatment agent include silane coupling agents such as 3-aminopropyltrimethoxysilane; titanate coupling agents; and aluminate coupling agents.

The support to which an atom transfer radical polymerization initiator group is bonded is obtained by, for example, a silane coupling reaction between a compound represented by Formula (VI) and the support, which is preferably silica gel. A-Q-Y-SiR₃₋ₙZₙ (VI)

In formula (VI), A represents an atom transfer radical polymerization initiator group. The atom transfer radical polymerization initiator group is preferably an α-haloalkylcarbonyl group, more preferably an α-bromoisobutyryl group, an α-bromopropionyl group, a bromoacetyl group, or a chloroacetyl group, and still more preferably an α-bromoisobutyryl group.

In Formula (VI), Q represents an oxygen atom, NH, or NCH ₃, and is preferably NH.

In Formula (VI), Y, R, Z, and n are synonymous with Y, R, Z, and n in Formula (I), respectively, and the same applies also to preferred embodiments thereof.

The compound represented by Formula (VI) may be commercially available, but can be also produced by reacting a compound having A with a compound having a group represented by -Y-SiR₃₋ₙZₙ. Note that the "-X-" in Formula (VI) is formed by a reaction between these compounds.

Examples of the compound having a structure represented by A include a compound in which a halogen atom such as a chlorine atom, a bromine atom, or an iodine atom is bonded to an atom transfer radical polymerization initiator group. Examples of such a compound include α-bromoisobutyryl bromide, α-bromoisobutyryl chloride, α-bromopropionyl bromide, α-bromopropionyl chloride, bromoacetyl bromide, bromoacetyl chloride, chloroacetyl bromide, and chloroacetyl bromide chloride, and α-bromoisobutyryl bromide is preferable.

Examples of the compound having a group represented by -Y-SiR₃₋ₙZₙ include a silane coupling agent having an alkoxy group having from 1 to 5 carbons as Z.

The support to which an atom transfer radical polymerization initiator group is bonded is preferably a surface-modified silica gel obtained by a silane coupling reaction between the compound represented by Formula (VI) and silica gel.

When the polymer having the amine-based side chain is supported on the support in the step (f), the polymer having the amine-based side chain is produced by subjecting a monomer having an amine-based side chain to atom transfer radical polymerization using an atom transfer radical polymerization initiator group bonded to the support as an initiator. As the reaction conditions of the atom transfer radical polymerization, any conditions can be adopted, such as conditions known in the field of polymer synthesis, and conditions equivalent thereto.

The monomer having the amine-based side chain used in the step (f) is the same as the monomer having the amine-based side chain used in the step (a), that is, one or more selected from the group consisting of the monomer represented by Formula (3) and the monomer represented by Formula (4).

A structure presumed as a preferred embodiment of the stationary phase obtained by supporting the polymer having the amine-based side chain on the support in the step (f) is shown in Formula (VII).

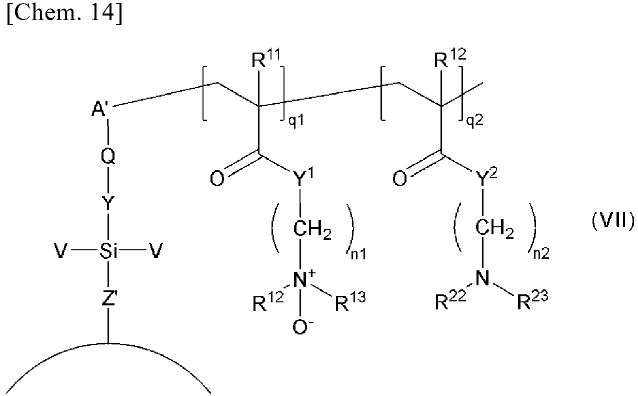

In Formula (VII), A' represents a group derived from A in Formula (VI). In other words, A' represents the residue of A formed by atom transfer radical polymerization. For example, when A is an α-bromoisobutyryl group, -A'-Q-Y-SiR₃₋ₙZₙ is -(CH₃)₂CCO-Q-Y-SiR₃₋ₙZₙ.

In Formula (VII), Z' and V are synonymous with Z' and V in Formula (II), respectively.

In Formula (VII), Y and Q are synonymous with Y and Q in Formula (VI), respectively, and the same applies also to preferred embodiments thereof.

In Formula (VII), R¹¹, R¹², R¹³, Y¹, and n1 are synonymous with R¹¹, R¹², R¹³, Y¹, and n1 in Formula (1), respectively, and the same applies also to preferred embodiments thereof.

In Formula (VII), R²¹, R²², R²³, Y², and n2 are synonymous with R²¹, R²², R²³, Y², and n2 in Formula (2), respectively, and the same applies also to preferred embodiments thereof.

In Formula (VII), q1, q2, and the sum of q1 and q2 each represent from 10 to 3000. Each of q1, q2, and the sum of q1 and q2 is preferably from 15 to 2500, and more preferably from 20 to 2000. At least one of q1 and q2 may be 0.

Next, the step (g) will be described.

Examples of the compound having a crosslinkable silyl group and an atom transfer radical polymerization initiator group used in the step (g) include the compound represented by Formula (VI).

The monomer having the amine-based side chain used in the step (g) is the same as the monomer having the amine-based side chain used in the step (a), that is, one or more selected from the group consisting of the monomer represented by Formula (3) and the monomer represented by Formula (4).

By subjecting the monomer having the amine-based side chain to atom transfer radical polymerization in the presence of the compound having a crosslinkable silyl group and an atom transfer radical polymerization initiator group, a polymer represented by Formula (VIII), that is, a polymer having the crosslinkable silyl group and the amine-based side chain can be obtained. This polymer has a crosslinkable silyl group at the end as shown in Formula (VIII).

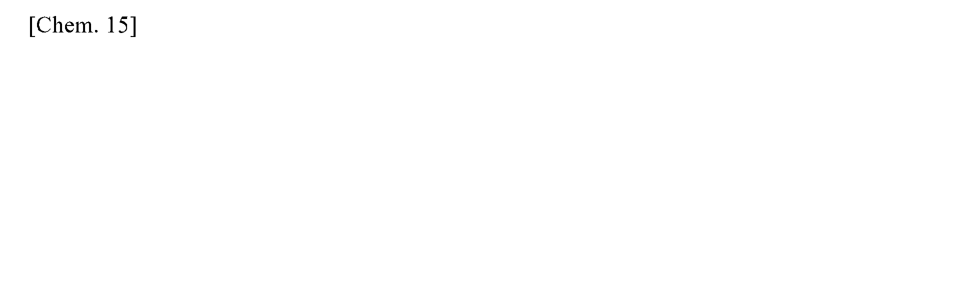

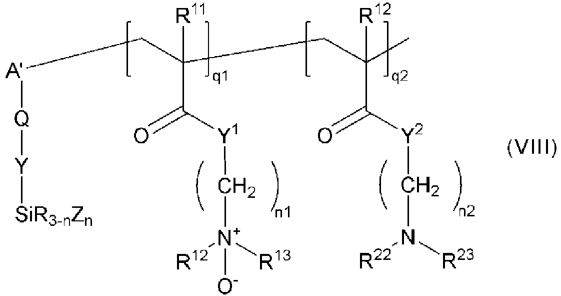

In Formula (VIII), Q, Y, R, Z, and n are synonymous with Q, Y, R, Z, and n in Formula (VI), respectively, and the same applies also to preferred embodiments thereof.

In Formula (VIII), A' is synonymous with A' in Formula (VII).

In Formula (VIII), R¹¹, R¹², R¹³, Y¹, and n1 are synonymous with R¹¹, R¹², R¹³, Y¹, and n1 in Formula (1), respectively, and the same applies also to preferred embodiments thereof.

In Formula (VIII), R²¹, R²², R²³, Y², and n2 are synonymous with R²¹, R²², R²³, Y², and n2 in Formula (2), respectively, and the same applies also to preferred embodiments thereof.

In Formula (VIII), q1, q2, and the sum of q1 and q2 each represent from 10 to 3000. Each of q1, q2, and the sum of q1 and q2 is preferably from 15 to 2500, and more preferably from 20 to 2000. At least one of q1 and q2 may be 0.

As a method for bonding the crosslinkable silyl group of the polymer having a crosslinkable silyl group and an amine-based side chain to the functional group on the surface of the support, a silane coupling reaction can be adopted. As the silane coupling reaction, a known reaction may be adopted, or any reaction equivalent thereto may be adopted.

A structure presumed as a preferred embodiment of the stationary phase obtained by supporting the polymer having the amine-based side chain on the support in the step (g) is shown in Formula (IX).

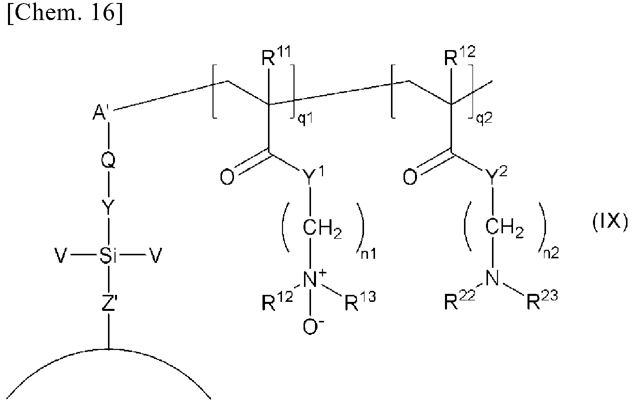

In Formula (IX), Z' and V are synonymous with Z' and V in Formula (II), respectively.

In Formula (V), Y, Q, A', R¹¹, R¹², R¹³, Y¹, n1, R²¹, R²², R²³, Y², n2, q1, q2, and the sum of q1 and q2 are synonymous with Y, Q, A', R¹¹, R¹², R¹³, Y¹, n1, R²¹, R²², R²³, Y², n2, q1, q2, and the sum of q1 and q2, respectively, and the same applies also to preferred embodiments thereof.

Next, the step (h) will be described.

As a method for coating the surface of the support with the polymer having the amine-based side chain, any method such as a known method and a method equivalent thereto can be used. Examples of the known method preferably include a method of coating (physically adsorbing) the surface of the support with a coating liquid containing the polymer having the amine-based side chain and a solvent, and then removing the solvent. The solvent of the coating liquid is not particularly limited as long as it can dissolve the polymer having the amine-based side chain, and examples thereof include water; aprotic polar solvents such as N,N-dimethylformamide (DMF), N,N-dimethylacetamide (DMAc), dimethylsulfoxide (DMSO), and N-methyl-2-pyrrolidone (NMP); cyclic amines such as pyridine; cyclic ethers such as THF and 1,4-dioxane; alcohols such as methanol and ethanol; and mixtures of two or more solvents selected therefrom. Among these, from the viewpoint of higher solubility of the polymer having the amine-based side chain, the solvent of the coating liquid is preferably water, an aprotic polar solvent, a cyclic amine, a cyclic ether, or a mixture of two or more solvents selected therefrom, more preferably water, an aprotic polar solvent, or a mixture of two or more solvents selected therefrom, and still more preferably water, DMF, or a mixture thereof.

The polymer having the amine-based side chain can be produced by polymerizing one or more monomers having an amine-based side chain selected from the group consisting of the monomer represented by Formula (3) and the monomer represented by Formula (4). When the polymer having the amine-based side chain contains an additional repeating unit, a monomer that forms the additional repeating unit may be further polymerized together with the monomer having the amine-based side chain. Examples of the monomer that forms the additional repeating unit include any polymerizable compounds such as a styrene compound and an olefin compound.

The method for polymerizing the monomer having the amine-based side chain is not particularly limited, and any polymerization method such as atom transfer radical polymerization, free radical polymerization, or chain transfer polymerization can be adopted. As the reaction conditions of the polymerization, any conditions can be adopted, such as conditions known in the field of polymer synthesis, and conditions equivalent thereto.

In any of the steps (a) to (h), when the polymer having the amine-based side chain has the repeating unit represented by Formula (1), the polymer having the amine-based side chain can also be produced by first polymerizing the monomer represented by Formula (4) to synthesize a polymer having the repeating unit represented by Formula (2) and then oxidizing the obtained polymer to convert a part or all of the tertiary amino groups in the side chain into N-oxide groups. Any oxidizing agent such as mCPBA can be used in the oxidizing.

In addition, the polymer having the amine-based side chain may have a crosslinked structure. In particular, when the stationary phase is produced by a method including the step (h), it is preferable to crosslink the polymer having the amine-based side chain after the step (h) to introduce a crosslinked structure into the polymer having the amine-based side chain. Thus, the polymer having the amine-based side chain is insolubilized and firmly immobilized on the support, and thus the polymer having the amine-based side chain is prevented from being dissolved in the mobile phase during chromatographic separation, and the functional deterioration of the stationary phase can be prevented.

Examples of the method for crosslinking the polymer having the amine-based side chain include a radiation crosslinking method by irradiation with, for example, γ-rays, X-rays, and electron beams; an ultraviolet crosslinking method by irradiation with ultraviolet rays; a thermal crosslinking method by heating; a crosslinking method using a compound having a crosslinkable group; and a combination thereof. As the crosslinking method, one or more selected from the radiation crosslinking method and the thermal crosslinking method are preferred, from the viewpoint of having less influence on the composition of the polymer having the amine-based side chain and having fewer problems of a residual reagent. The dose in the radiation crosslinking method and the ultraviolet crosslinking method, and the heating temperature and the heating time in the thermal crosslinking method may be selected depending on the degree of crosslinking and the degree of deterioration of the polymer having the amine-based side chain.

The number-average molecular weight (Mn) of the polymer having the amine-based side chain is not particularly limited, but is preferably from 2000 to 600000, more preferably from 2500 to 500000, and even more preferably from 3000 to 400000.

The weight-average molecular weight (Mw) of the polymer having the amine-based side chain is not particularly limited, but is preferably from 2000 to 600000, more preferably from 2500 to 500000, and still more preferably from 3000 to 400000, in that solubility in a solvent can be ensured and aggregation of particles when the polymer having the amine-based side chain is supported on the support can be prevented.

The polydispersity index (PDI) of the polymer having the amine-based side chain is not particularly limited, but is usually from 1.0 to 5.0, more preferably from 1.0 to 3.0, and still more preferably from 1.0 to 2.0.

The number-average molecular weight (Mn) and the weight-average molecular weight (Mw) of the polymer having the amine-based side chain are calculated in terms of polystyrene standards by size exclusion chromatography (SEC). In size exclusion chromatography (SEC), the measurement is performed under the conditions described in Examples.

However, when the stationary phase is produced by a method including the step (a), (d), (e), or (f), the synthesis of the polymer having the amine-based side chain and the supporting of the polymer having the amine-based side chain on the support occur in parallel, and thus, the weight-average molecular weight is estimated from the supernatant of a polymerization solution.

On the other hand, when the stationary phase is produced by a method including the step (b), (c), or (g), the weight average molecular weight of the polymer having the amine-based side chain is measured before the polymer is bonded to the support.

The polydispersity index (PDI) of the polymer having the amine-based side chain is calculated by dividing the weight-average molecular weight (Mw) calculated by the above-described method by the number-average molecular weight (Mn).

The average thickness of the polymer having the amine-based side chain supported on the support (supported amount per g of support/specific surface area of support) is not particularly limited, but is preferably from 5 nm to 25 nm, and more preferably from 10 nm to 20 nm. When the average thickness of the polymer having the amine-based side chain is within the above range, a sharp peak tends to be obtained, which is preferable.

The content of the polymer having the amine-based side chain in 100 parts by mass of the stationary phase in which the polymer having the amine-based side chain is supported on the support is not particularly limited, but is preferably from 10 mass% to 45 mass%, more preferably from 10 mass% to 30 mass%, and still more preferably from 20 mass% to 25 mass%. By setting the content of the polymer having the amine-based side chain within the above range, broadening of the peak width can be suppressed, while the adsorption ability of the polymer having the amine-based side chain is appropriately exhibited. The content of the polymer having the amine-based side chain in the stationary phase is measured by an elemental analysis method.

The content of the polymer having the amine-based side chain in 100 parts by mass of the stationary phase is measured by elemental analysis. Based on the measurement result of the carbon content of a support not supporting the polymer having the amine-based side chain and the carbon content of the stationary phase, the content of the polymer having the amine-based side chain in the stationary phase is calculated assuming that all the carbons other than the carbons contained in the support not supporting the polymer having the amine-based side chain are derived from the polymer having the amine-based side chain.

### 1-3. Chromatography

The chromatography applied to the stationary phase according to the first embodiment is not particularly limited, and examples thereof preferably include liquid chromatography and supercritical fluid chromatography.

Examples of the liquid chromatography include, but are not limited to, normal phase chromatography, reverse phase chromatography, size exclusion chromatography, and ion exchange chromatography. As shown in Examples described later, the stationary phase according to the present embodiment exhibits good retention by hydrophilic partition, and thus, can be suitably applied to normal phase chromatography, particularly hydrophilic interaction chromatography (HILIC).

### 2. Method for Producing Stationary Phase for Chromatography

A second embodiment of the present disclosure is a method for producing a stationary phase for chromatography, the method including any one of steps (a) to (h). The monomer having the amine-based side chain in the steps (a) to (g) is one or more selected from the group consisting of the monomer represented by Formula (3) and the monomer represented by Formula (4). Further, the polymer supported on the support in the steps (a) to (h) is a polymer having an amine-based side chain and has one or more repeating units selected from the group consisting of the repeating unit represented by Formula (1) and the repeating unit represented by Formula (2).

The steps (a) to (h) in the present embodiment are respectively synonymous with the steps (a) to (h) described in the description of the first embodiment, and the same applies also to preferred aspects thereof. In addition, the repeating unit represented by Formula (1), the repeating unit represented by Formula (2), the monomer represented by Formula (3), the monomer represented by Formula (4), and the support are also synonymous with the repeating unit represented by Formula (1), the repeating unit represented by Formula (2), the monomer represented by Formula (3), the monomer represented by Formula (4), and the support in the first embodiment, respectively, and the same applies also to preferred aspects thereof.

The stationary phase for chromatography according to the first embodiment can be produced by the production method according to the present embodiment.

The production method according to the present embodiment may include an optional step in addition to the steps described above. Examples of the optional step include oxidizing and crosslinking, as described in the description of the first embodiment.

### 3. Separation Method

A third embodiment of the present disclosure is a separation method including separating a substance by chromatography using the stationary phase according to the first embodiment. As for the chromatography, liquid chromatography is preferable, and normal phase chromatography is more preferable. The stationary phase according to the first embodiment is excellent in retention by hydrophilic partition as shown in Examples described later, and thus, as for the chromatography, hydrophilic interaction chromatography (HILIC) is particularly preferred among normal phase chromatography.

The chromatography can be carried out using a commercially available chromatograph such as a liquid chromatograph or a supercritical fluid chromatograph. The various conditions such as the column equilibration conditions and flow rate can be selected depending on, for example, the column size, the sample volume, and the type of the mobile phase.

The substance to be separated by the separation method according to the present embodiment is not particularly limited, but is preferably one or more selected from the group consisting of a hydrophilic substance and a polar substance. As shown in Examples described later, the stationary phase according to the first embodiment is excellent in retention by hydrophilic partition and OH group selectivity, and thus, it is considered that the separation method according to the present embodiment can be suitably used for the separation of these substances. Examples of the hydrophilic substance and the polar substance include saccharides, glycosides, nucleic acids, and nucleosides. In addition, the stationary phase according to the first embodiment exhibits good stereoselectivity and good regioisomeric selectivity, and thus, the separation method according to the present embodiment can also separate, for example, diastereomers, enantiomers, and regioisomers well.

The solvent of the mobile phase in separation by liquid chromatography is not particularly limited, but is preferably an organic solvent capable of dissolving the substance to be separated, and examples thereof include an organic solvent, water, and a mixed solvent of water and an organic solvent.

Examples of the organic solvent include, but are not limited to, acetonitrile, methanol, ethanol, n-propanol, 2-propanol, tetrahydrofuran, 2-methyltetrahydrofuran, dimethyl sulfoxide (DMSO), dimethylformamide (DMF), and dimethylacetamide (DMAc), acetone, methylethylketone, diethylketone, methyl tert-butylether, chloroform, and dichloromethane. Further, the organic solvent may be a mixture generally used in chromatography, such as a mixture of a hydrocarbon having from 5 to 8 carbons and an alcohol.

One type of the organic solvent may be used alone, or two or more types thereof may be used in combination in optionally selected combination and ratio.

Among these, the organic solvent is preferably one or more selected from acetonitrile, methanol, ethanol, n-propanol, 2-propanol, and tetrahydrofuran, more preferably one or more selected from methanol and acetonitrile, and still more preferably acetonitrile, from the viewpoint of high chemical stability.

Examples of the solvent of the mobile phase in separation by supercritical fluid chromatography include supercritical carbon dioxide, a mixture of supercritical carbon dioxide and an organic solvent, and a mixture of supercritical carbon dioxide, an organic solvent, and water. As the organic solvent contained in the mixture, those described as the organic solvents used in the mobile phase for liquid chromatography can be suitably used.

### EXAMPLES

Hereinafter, the present disclosure will be described more specifically with reference to Examples, but the present disclosure is not limited to the following Examples as long as there is no deviation from the gist of the present disclosure.

### Synthesis Example 1: Synthesis of 3-Dimethylaminopropylacrylamide N-Oxide

3-dimethylaminopropylacrylamide was dissolved in methanol in an approximately twofold volume of 3-dimethylaminopropylacrylamide to yield a 3-dimethylaminopropylacrylamide solution. While the resulting solution was cooled in an ice bath, hydrogen peroxide in an amount equivalent (molar equivalent) to the dimethylamino group was added to the solution using a 35% aqueous hydrogen peroxide solution, and the mixture was stirred at room temperature for several hours. The reaction was monitored by TLC, and 35% aqueous hydrogen peroxide solution was further added to the reaction liquid until the spot corresponding to 3-dimethylaminopropylacrylamide disappeared in TLC, and the reaction was carried out at room temperature. After confirming that the spot corresponding to 3-dimethylaminopropylacrylamide disappeared in TLC, methanol was removed by an evaporator to yield 3-dimethylaminopropylacrylamide N-oxide.

### Synthesis Example 2: Synthesis of Silica to Which Atom Transfer Radical Polymerization Initiator Group is Bonded

In 20 mL of tetrahydrofuran, 3.53 g of 3-aminopropyltriethoxysilane and triethylamine were dissolved, and the obtained solution was stirred in an ice bath. To the solution, a solution of 4.23 g of α-bromoisobutyrylbromide in tetrahydrofuran (30 mL) was added dropwise over 20 minutes. Thereafter, tetrahydrofuran was removed under reduced pressure to yield a colorless solid. To the resulting solid, 80 mL of ethyl acetate was added, insoluble matter was removed, and then ethyl acetate was distilled off to yield 6.31 g of 3-(α-bromoisobutyramide)propyltriethoxysilane (ATRPini).

3.78 g of a porous silica gel ("ChromatoRex SPS100-5" manufactured by Fuji Silysia Chemical Ltd., particle size: 5 µm, specific surface area: 300 m²/g, mean pore size: 10 nm), 3.94 g of ATRPini, 0.87 g of pyridine, and 80 mL of toluene were mixed, and the mixture was degassed under reduced pressure for 30 minutes under ultrasonic radiation. The resulting reaction liquid was heated under reflux for 3 hours, and then the reaction liquid was subjected to suction filtration, and thus, a solid was collected. The solid was washed with acetone and then dried to yield 4.24 g of silica (ATRPini-silica) to which an atom transfer radical polymerization initiator group was bonded. ATRPini-silica is presumed to have the following structure.

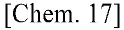

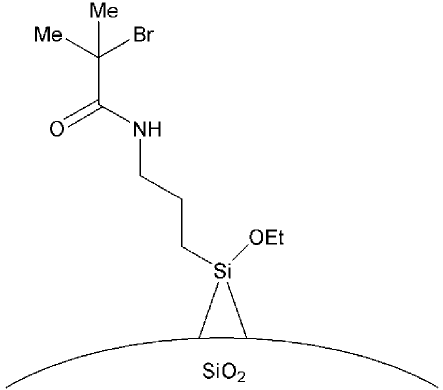

### Example 1: Preparation of Stationary Phase for Chromatography

To a flask, 0.75 g of 3-dimethylaminopropylacrylamide N-oxide (DMAPAAm N-Oxide), 0.75 g of ATRPini-silica, 0.10 g of tris[2-(dimethylamino)ethyl]amine (Me6TREN), 0.075 g of tetraethylammonium bromide (TEAB), 6 mL of water, and 3 mL of acetonitrile were added and degassed under reduced pressure for 15 minutes under ultrasonic radiation. The resulting reaction liquid was stirred for 25 minutes and bubbled with argon gas while being heated to 40°C in a water bath. To the liquid, 48 mg of copper (I) bromide and 3 mL of acetonitrile were added, and the reaction liquid was stirred in a water bath at 40°C for 3 hours while being heated.

The reaction mixture was then transferred to a centrifuge tube, centrifuged for 10 minutes to remove the supernatant, mixed with 0.10 g of disodium ethylenediaminetetraacetate dihydrate and 30 mL of ammonium acetate buffer (100 mM, pH = 4.6), and stirred overnight at room temperature. The resulting mixture was centrifuged for 10 minutes, and the supernatant was removed to yield a precipitate. The precipitate was dispersed in water, and a solid was collected by suction filtration. The solid was washed with methanol and acetone, respectively, and then dried at 100°C for 1 hour to yield 0.841 g of a stationary phase for chromatography (PDMAPAAm N-Oxide silica). The PDMAPAAm N-Oxide silica is presumed to have the following structure.

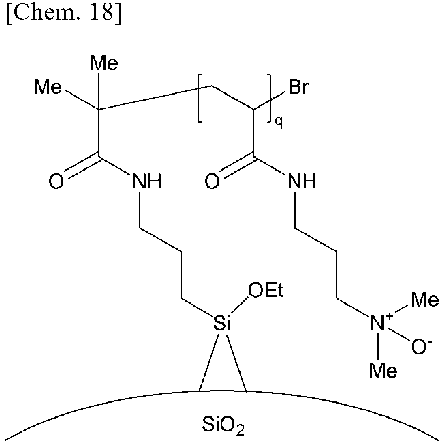

### Example 2: Preparation of Stationary Phase for Chromatography

A stationary phase for chromatography (PDMAPAAm silica) was obtained in the same manner as in Example 1, except that 3-dimethylaminopropylacrylamide N-oxide (DMAPAAm N-Oxide) was changed to 3-dimethylaminopropylacrylamide (DMAPAAm). The PDMAPAAm silica is presumed to have the following structure.

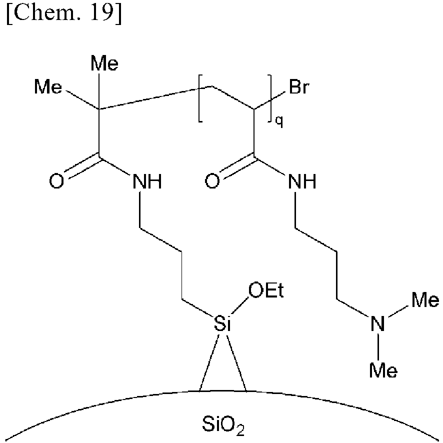

### Comparative Example 1: Stationary Phase for Chromatography

A porous silica gel ("CHROMATOREX SPS100-5" manufactured by Fuji Silysia Chemical Ltd.) was used as a stationary phase for chromatography of Comparative Example 1.

### Comparative Example 2: Preparation of Stationary Phase for Chromatography

A stationary phase for chromatography (PTMAPPAm silica) was obtained in the same manner as in Example 1, except that 3-dimethylaminopropylacrylamide N-oxide (DMAPAAm N-Oxide) was changed to 3-trimethylaminopropylacrylamidechloride (TMAPPAm). The PTMAPPAm silica is presumed to have the following structure.

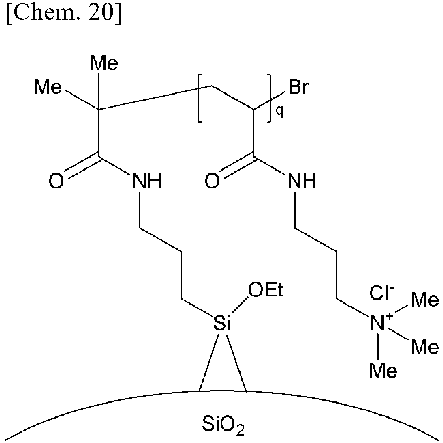

### Reference Example 1: Stationary Phase for Chromatography

The ATRPini-silica obtained in Synthesis Example 2 was used as a stationary phase for chromatography in Reference Example 1.

### Column Test

Each of the stationary phases was dispersed in 10 mL of a mixed solvent (50/50 (v/v)) of water and a slurry solvent ("Chemco Slurry Mix SB" manufactured by Chemco Plus Scientific Co., Ltd.), and the resultant mixture was packed in a stainless steel column (inner diameter of 3 mm) to prepare a column for hydrophilic interaction chromatography (HILIC).

Items shown in Table 1 were evaluated under the following measurement conditions according to a column test method using the prepared columns for HILIC. The results are shown in Table 2 and Table 3.
Measurement Conditions
   - Mobile phase (Examples, Comparative Examples, Reference Example): Acetonitrile (ACN)/AcONH₄ buffer (100 mM, pH 4.76) (ACN/AcONH₄ buffer = 90/10 (v/v))
   - Mobile phase (other samples): α (AX), α (CX)···Acetonitrile (ACN)/AcONH₄ buffer (100 mM, pH 4.76) (ACN/AcONH₄ buffer = 90/10 (v/v))
      Items other than the above···Acetonitrile (ACN)/AcONH₄ buffer (20 mM, pH 4.76)
   - Column temperature: 30°C
   - Linear velocity: 1.0 mm/sec
   - Flow rate: 0.3 mL/min
   - Detector: UV detector (254 nm)
Evaluation Items
   - Retention coefficient k(X) of substance X is equal to (t_{R} - t₀)/t₀
      t_{R}: Retention time of substance X
      t₀: Elution time of non-retained substance
   - Selectivity α(Y/Z) of substance Y to substance Z is equal to k(Y)/k(Z)
      k(Y): Retention coefficient of substance Y
      k(Z): Retention coefficient of substance Z

### [Table 1]

**Table 1**

| Evaluation item | | Evaluation detail |
|---|---|---|
| k(U) | k(uridine) | Retention coefficient of Uridine |
| α(U/5MU) | k(uridine)/k(5-methyluridine) | CH₃ Group Selectivity (Hydrophobic Selectivity) |
| α(U/2'dU) | k(uridine)/k(2'-deoxyuridine) | OH group selectivity |
| α(V/A) | k(vidarabine)/k(adenosine) | Stereoselectivity |
| α(α/β) | k(NPαGlu*¹)/k(NPβGlu*²) | Stereoselectivity |
| α(2d/3d) | k(2'-deoxyguanosine)/k(3'-deoxyguanosine) | Regioisomeric selectivity |
| α(AX) | k(sodium p-toluenesulfonate)/k(uridine) | Anion exchangeability |
| α(CX) | k(N,N,N-trimethylphenylammonium chloride)/k(uridine) | Cation exchangeability |
| α(Tb/Tp) | k(theobromine)/k(theophylline) | pH of the surface of the stationary phase |
| α(U/5FU) | k(uridine)/k(5-fluorouridine) | Amino group selectivity |
| α(2'dU/2'd5FU) | k(2'-deoxyuridine)/k(2'-deoxy-5-fluorouridine) | Amino group selectivity |
| α(5FU/2'd5FU) | k(5-fluorouridine)/k(2'-deoxy-5-fluorouridine) | Amino group selectivity |
| α(U/isoU) | k(uridine)/k(2',3'-O-isopropylidenuridine) | OH group selectivity |
| α(Cyd/isoCyd) | k(cytidine)/k(2',3'-O-isopropylidencytidine) | OH group selectivity |
| α(A/isoA) | k(adenosine)/k(2',3'-O-isopropyliden adenosine) | OH group selectivity |
| α(I/isoI) | k(inosine)/k(2',3'-O-isopropylideninosine) | OH group selectivity |
| α(G/isoG) | k(guanosine)/k(2',3'-O-isopropyliden guanosine) | OH group selectivity |
| α(U/2,2'-CyU) | k(uridine)/k(2,2'-O-cyclonuridine) | OH group selectivity |

| | | |
|---|---|---|
| * 1: N,N,N-4-nitrophenyl α-D-glucopyranoside * 2: N,N,N-4-nitrophenyl β-D-glucopyranoside | | |

### [Table 2]

**Table 2**

| | k(U) | α(U/5MU) | α(U/2'dU) | α(V/A) | α(α/β) | α(2d/3d) | α(AX) | α(CX) | α(Tb/Tp) |
|---|---|---|---|---|---|---|---|---|---|
| Example 1 | 13.75 | 1.66 | 2.71 | 2.18 | 1.24 | 1.12 | 0.52 | 0.05 | 0.72 |
| Example 2 | 12.75 | 1.63 | 2.65 | 2.06 | 1.18 | 1.12 | 0.82 | 0.01 | 0.56 |
| Comparative Example 1 | 0.78 | 1.14 | 1.08 | 0.86 | 1.28 | 1.12 | 0.20 | 6.49 | 1.24 |
| Comparative Example 2 | 3.48 | 1.83 | 2.50 | 1.97 | 1.14 | 1.11 | 5.25 | 0.01 | 0.89 |
| Reference Example 1 | 0.06 | 1.15 | 0.80 | 1.09 | 1.00 | 1.05 | -2.55 | 80.63 | 1.04 |

### [Table 3]

**Table 3**

| | α(5F) | α(2'dU/2'd5FU) | α(U/isoU)* | α(Cyd/isoCyd) | α(A/isoA)* | α(I/isoI)* | α(G/isoG)* | α(U/2,2'-CyU) |
|---|---|---|---|---|---|---|---|---|
| Example 1 | 1.41 | 1.51 | 35.51 | 33.32 | 28.47 | 34.91 | 38.15 | 1.43 |
| Example 2 | 0.72 | 0.78 | 38.27 | 17.78 | 32.94 | 39.52 | 79.48 | 1.41 |
| Comparative Example 1 | 1.53 | 1.62 | 3.20 | 3.50 | 3.36 | 3.42 | 3.34 | 0.40 |
| Comparative Example 2 | 0.65 | 0.74 | 118.50 | 62.37 | 129.54 | 72.80 | 53.76 | 1.12 |
| Reference Example 1 | 1.89 | 1.75 | 2.94 | 2.18 | 2.20 | 2.18 | 1.87 | 0.45 |

| | | | | | | | | |
|---|---|---|---|---|---|---|---|---|
| *: Measurement was performed twice. The average value of two measurements is shown. | | | | | | | | |

The k(U) of the stationary phases of Comparative Example 1, Comparative Example 2, and Reference Example 1 were 0.78, 3.48, and 0.06, respectively. In contrast, the k(U) of the stationary phases of Example 1 and Example 2 were 13.75 and 12.75, respectively, which were significantly larger than the k(U) of the stationary phases of Comparative Example 1 and Comparative Example 2 and Reference Example 1. Furthermore, the k(U) of the stationary phases of Example 1 and Example 2 was a value significantly larger than the k(U) (4.58) of "TSKgel Amide-80" manufactured by Tosoh Corporation having the largest retention among commercially available HILIC columns. This indicates that the stationary phases of Example 1 and Example 2 have very strong interactions with the hydrophilic substances and the polar substances, and are excellent in retaining the hydrophilic substances.

The α(U/2'dU) of the stationary phases of Example 1 and Example 2 were 2.71 and 2.65, respectively. On the other hand, the (U/2'dU) of the unmodified porous silica gel of Comparative Example 1 was 1.14, which was smaller than the above. This indicates that the stationary phases of Example 1 and Example 2 have high selectivity for OH groups.

The stationary phases of Example 1 and Example 2 exhibited α(U/5MU), α(V/A), α(α/β), and α(2d/3d) equal to or higher than those of the stationary phases of Comparative Example 1 and Comparative Example 2. This indicates that the stationary phases of Example 1 and Example 2 have high hydrophobic selectivity, stereoselectivity, and regioisomeric selectivity.

The stationary phases of Example 1 and Example 2 are considered to be stationary phases having a basic surface, because of α(Tb/Tp) of 1 or less in the stationary phases of Example 1 and Example 2. On the other hand, α(U/5MU) of the unmodified porous silica gel of Comparative Example 1 is considered to be a stationary phase having an acidic surface, because α(Tb/Tp) of the unmodified porous silica gel of Comparative Example 1 is larger than 1.

The α(I/isoI) of the unmodified porous silica gel of Comparative Example 1 was 3.42. On the other hand, α(I/isoI) of the stationary phases of Example 1 and Example 2 was 34.91 and 39.52, respectively, which were larger values than those of the unmodified porous silica gel of Comparative Example 1. This indicates that the stationary phases of Example 1 and Example 2 have high selectivity to diol.

### Plot I of Separation Characteristics of Stationary Phases for Chromatography

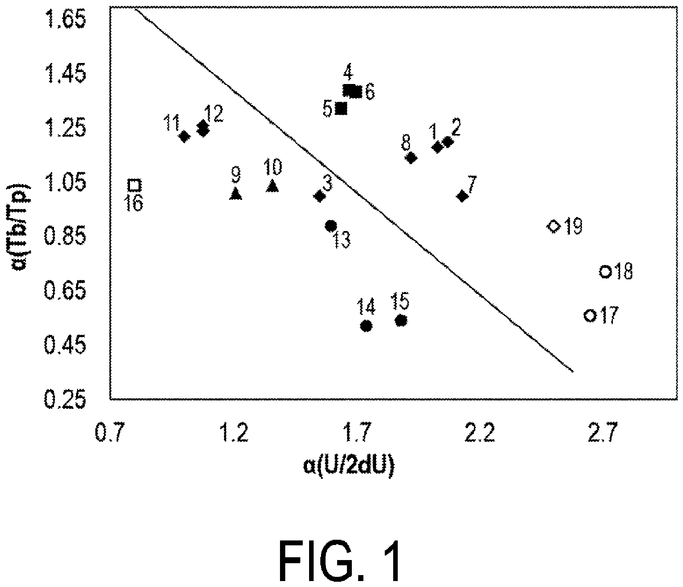

For each stationary phase shown in Table 4, a graph was prepared by plotting α(Tb/Tp), which is an index of the surface pH of the stationary phase, on the vertical axis and α(U/2dU), which is an index of hydrophilicity, on the horizontal axis. The results are shown in FIG. 1.

In FIG. 1, the surface of the stationary phase is neutral when α(Tb/Tp) is around 1, weakly acidic (has cation exchange properties) when α(Tb/Tp) is larger than 1, and basic (has anion exchange properties) when α(Tb/Tp) is smaller than 1. In addition, the larger the α(U/2'dU), the higher the OH group selectivity. In FIG. 1, the lower-left region of the auxiliary straight line shows the separation characteristics generally observed in a monomolecularly modified stationary phase having a surface modified with a monomolecular having a length of several nm, and the upper-right region of the straight line shows the separation characteristics generally observed in a polymer-modified stationary phase modified with a polymer having a thickness of about 15 nm.

### [Table 4]

**Table 4**

| | Stationary phase | | Manufacturer |
|---|---|---|---|
| 1 | Zwitterionic type | SeQuant ZIC-HILIC (5 µm) | Merck KGaA |
| 2 | Zwitterionic type | SeQuant ZIC-HILIC (3.5 µm) | Merck KGaA |
| 3 | Zwitterionic type | Nucleodur HILIC | Macherey Nagel GmbH & Co. KG |
| 4 | Amide type | TSKgel Amide-80 (5 µm) | Tosoh Corporation |
| 5 | Amide type | TSKgel Amide-80 (3 µm) | Tosoh Corporation |
| 6 | Amide type | XBridge Amide | Waters Corporation |
| 7 | Zwitterionic type | PolySULFOETHYL | PolyLC Inc. |
| 8 | Zwitterionic type | PolyHYDROXYETHYL | PolyLC Inc. |
| 9 | Neutral type | Astec CYCLOBOND I | Merck KGaA |
| 10 | Neutral type | LiChrospher Diol | Agilent Technologies, Ltd. |
| 11 | Unmodified Silica | Chromolith Si | Merck KGaA |
| 12 | Unmodified Silica | HALO HILIC | Shimadzu GLC Ltd. |
| 13 | Amine type | COSMOSIL HILIC | NACALAI TESQUE, INC. |
| 14 | Amine type | COSMOSIL Sugar-D | NACALAI TESQUE, INC. |
| 15 | Amine type | COSMOSIL 5NH ₂ -MS | NACALAI TESQUE, INC. |
| 16 | ATRPini-silica | Reference Example 1 | - |
| 17 | N-oxide type | Example 1 | - |
| 18 | Amine type | Example 2 | - |
| 19 | Quaternary ammonium type | Comparative Example 2 | - |

From FIG. 1, it is seen that the stationary phases of Example 1 and Example 2 exhibit the same separation characteristics as that of the polymer-modified stationary phase, not the monomolecular-modified stationary phase. It is also found that the stationary phases of Example 1 and Example 2 exhibit new separation characteristics that are not classified into any of the amide type, the zwitterionic type, the unmodified silica, the neutral type, and the amine type. In particular, it was shown that the N-oxide type stationary phase of Example 1 exhibits alkoxide-like basicity, unlike the amine type stationary phase.

### Plot II of Separation Characteristics of Stationary Phase for Chromatography

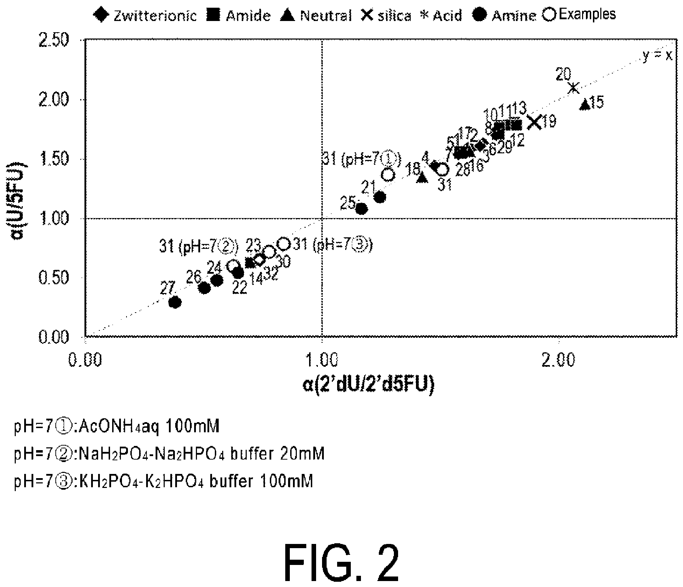

For each stationary phase shown in Table 5, a graph was prepared by plotting α(U/5FU), which is an index of amino group selectivity, on the vertical axis and α(2'dU/2'd5FU), which is an index of amino group selectivity, on the horizontal axis. The results are shown in FIG. 2.

### [Table 5]

**Table 5**

| | Stationary phase | | Manufacturer |
|---|---|---|---|
| 1 | Zwitterionic type | SeQuant ZIC-HILIC (5 µm, 200 A) | Merck KGaA |
| 2 | Zwitterionic type | SeQuant ZIC-HILIC (3.5 µm, 200 A) | Merck KGaA |
| 3 | Zwitterionic type | SeQuant ZIC-HILIC (3.5 µm, 100 A) | Merck KGaA |
| 4 | Zwitterionic type | SeQuant ZIC-cHILIC | Merck KGaA |
| 5 | Zwitterionic type | SeQuant ZIC-pHILIC | Merck KGaA |
| 6 | Zwitterionic type | Nucleodur HILIC (3 µm) | Macherey Nagel GmbH & Co. KG |
| 7 | Zwitterionic type | PC HILIC (3 µm) | OSAKA SODA CO., LTD. |
| 8 | Zwitterionic type | Click Xlon | Achrom nv |
| 9 | Amide type | TSKgel Amide-80 | Tosoh Corporation |
| 10 | Amide type | TSKgel Amide-80 (3 µm) | Tosoh Corporation |
| 11 | Amide type | TSKgel Amide-80 (2 µm) | Tosoh Corporation |
| 12 | Amide type | XBridge Amide (3.5 µm) | Waters Corporation |
| 13 | Amide type | AQUITY BEH Amide (1.7 µm) | Waters Corporation |
| 14 | Amide type | SunShell HILIC-Amide (2.6 µm) | ChromaNik Technologies Inc. |
| 15 | Neutral type | ULTRON AF-HILIC-CD | Shinwa Chemical Industries, Ltd. |
| 16 | Neutral type | LiChrospher 100 Diol | Merck KGaA |
| 17 | Neutral type | Ascentis Express OH5 (2.7 µm) | Merck KGaA |
| 18 | Neutral type | CHIRALPAC ZWIX | Daicel Corporation |
| 19 | Unmodified Silica | Chromolith Si | Merck KGaA |
| 20 | Acidic type | DCpak PTZ | Daicel Corporation |
| 21 | Amine type | COSMOSIL HILIC | NACALAI TESQUE, INC. |
| 22 | Amine type | COSMOSIL Sugar-D | NACALAI TESQUE, INC. |
| 23 | Amine type | COSMOSIL 5NH ₂ -MS | NACALAI TESQUE, INC. |
| 24 | Amine type | URUTRON AF-HILIC-DA | Shinwa Chemical Industries, Ltd. |
| 25 | Amine type | Inertsil NH₂ (old*³) | GL Sciences Inc. |
| 26 | Amine type | MAS-Si*¹ | - |
| 27 | Amine type | APTS*² | - |
| 28 | Amide type | FRP-PAAm*³ | - |
| 29 | Amide type | FRP-PAAm*⁴ | - |
| 30 | Amine type | Example 2 | - |
| 31 | N-oxide type | Example 1 | - |
| 32 | Quaternary ammonium type | Comparative Example 2 | - |

| | | | |
|---|---|---|---|
| * 1: Methacrylamidopropylsilane-bonded stationary phase * 2: Stationary phase modified with 3-aminopropyltriethoxysilane * 3: Stationary phase obtained by free radical polymerization of acrylamide on a stationary phase modified with 3-aminopropyltriethoxysilane (170 mg of acryl amide was used per 5 mL of the polymerization solution) * 4: Stationary phase obtained by free radical polymerization of acrylamide on a stationary phase modified with 3-aminopropyltriethoxysilane (290 mg of acryl amide was used per 5 mL of the polymerization solution) * 5: Stored for 12 years after purchase (amino groups are considered to have decreased compared to that immediately after production) | | | |

In FIG. 2, the plots were distributed in a substantially linear manner. This is considered to be based on the fact that the separation is achieved by partitioning rather than adsorption.

It is seen from FIG. 2 that for the stationary phase of Example 1, α(U/5FU) and α(2'd/2'd5FU) are 1 or more, respectively, when the pH of the mobile phase is 4.7, and the stationary phase of Example 1 exhibits separation characteristics different from that of the amine type stationary phase in which these values are often distributed in a region of 1 or less. On the other hand, when the pH of the mobile phase is 7.0, the stationary phase of Example 1 shows different behaviors depending on the buffer.

It is also found that the stationary phase of Example 2 exhibits the same separation characteristics as the amine type stationary phase, whether the pH of the mobile phase is 4.7 or 7.0.

### Plot III of Separation Characteristics of Stationary Phase for Chromatography

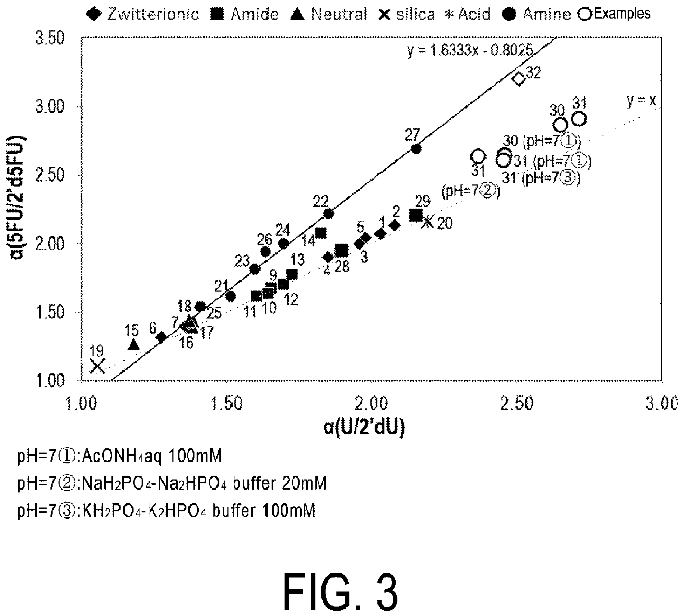

For each stationary phase shown in Table 5, a graph was prepared by plotting α(5FU/2'd5FU), which is an index of amino group selectivity, on the vertical axis and α(U/2'dU), which is an index of hydrophilicity, on the horizontal axis. The results are shown in FIG. 3.

In FIG. 3, the stationary phases 1 to 29 were roughly classified into two groups, i.e., a group distributed along the auxiliary line indicated by the solid line and a group distributed along the auxiliary line indicated by the dashed line. More specifically, the amine type stationary phases were distributed along the solid line having a steep slope, and the unmodified silica, the neutral type stationary phases, the amide type stationary phases, the zwitterionic type stationary phases, the acidic type stationary phase, and the quaternary ammonium type stationary phase (Comparative Example 2) were distributed along the dashed line having a gentle slope.

On the other hand, from FIG. 3, the stationary phase of Example 1 was deviated from both the solid line and the dashed line. In addition, the stationary phase of Example 2 was plotted near the solid line when the pH of the mobile phase was 4.7, and deviated from both the solid line and the dashed line when the pH of the mobile phase was 7.0. From these results, it is understood that the stationary phases of Example 1 and Example 2 exhibit separation characteristics different from those of the typical stationary phases.

### Plot IV of Separation Characteristics of Stationary Phase for Chromatography

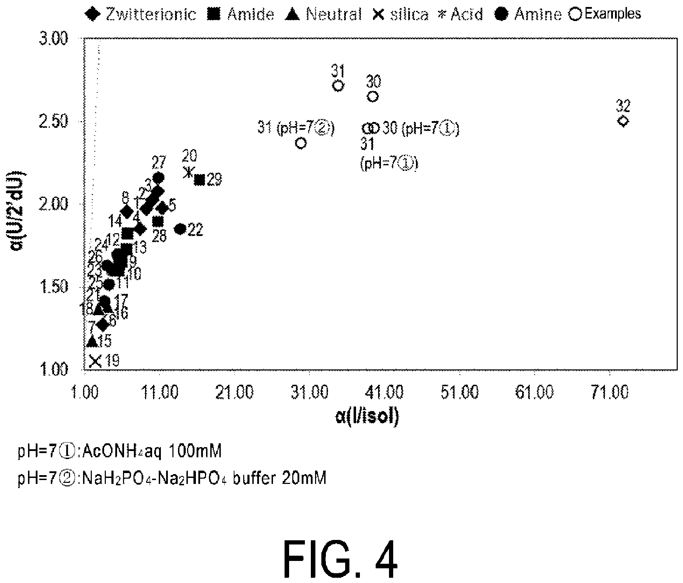

For each stationary phase shown in Table 5, a graph was prepared by plotting α(U/2'dU), which is an index of hydrophilicity, on the vertical axis and α(I/isol), which is an index of inosine selectivity to inosine protected by acetal, on the horizontal axis. The results are illustrated in FIG. 4.

In FIG. 4, it can be seen that the plots of the stationary phases of Example 1 and Example 2 are distributed in the upper-right of the graph, and the OH group selectivity is very high. Therefore, it can be said that the stationary phases of Example 1 and Example 2 are suitable for the separation performance of polar substances having one or more OH groups.

## Claims

1. A stationary phase for chromatography, wherein
a polymer having an amine-based side chain is supported on a support, and
the polymer having the amine-based side chain has one or more repeating units selected from the group consisting of a repeating unit represented by Formula (1) and a repeating unit represented by Formula (2): 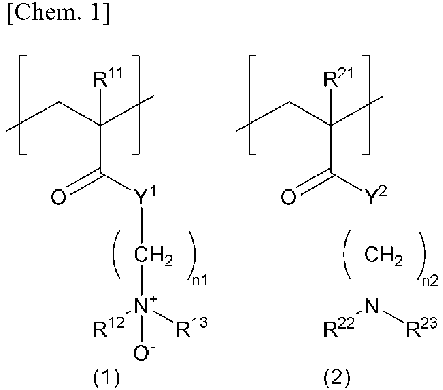
where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.

2. The stationary phase for chromatography according to claim 1, wherein
the polymer having the amine-based side chain is supported on the support via a chemical bond.

3. The stationary phase for chromatography according to claim 1, the stationary phase being used for hydrophilic interaction chromatography.

4. The stationary phase for chromatography according to claim 1, wherein the support is a porous inorganic support or non-porous inorganic support.

5. A separation method comprising:
separating a substance by hydrophilic interaction chromatography using the stationary phase for chromatography according to any one of claims 1 to 4.

6. A method for producing a stationary phase for chromatography, the method comprising:
any one of steps (a) to (h):
(a) subjecting a monomer having an amine-based side chain to free radical polymerization in the presence of a support to which a polymerizable functional group is bonded;
(b) subjecting a monomer having an amine-based side chain to chain transfer polymerization in the presence of a compound having a crosslinkable silyl group and a chain transfer functional group to yield a polymer having the crosslinkable silyl group and the amine-based side chain, and bonding the crosslinkable silyl group of the polymer to a functional group on a surface of a support;
(c) polymerizing a monomer having an amine-based side chain and a silane coupling agent having a polymerizable functional group, and binding the obtained polymer to a support by a silane coupling reaction;
(d) polymerizing a monomer having an amine-based side chain and a silane coupling agent having a polymerizable functional group in the presence of a support;
(e) subjecting a monomer having an amine-based side chain to chain transfer polymerization in the presence of a support to which a chain transfer functional group is bonded;
(f) radically polymerizing a monomer having an amine-based side chain in the presence of a support to which an atom transfer radical polymerization initiator group is bonded;
(g) subjecting a monomer having an amine-based side chain to atom transfer radical polymerization in the presence of a compound having a crosslinkable silyl group and an atom transfer radical polymerization initiator group to yield a polymer having the crosslinkable silyl group and the amine-based side chain, and bonding the crosslinkable silyl group of the polymer to a functional group on a surface of a support; and
(h) coating a surface of a support with a polymer having an amine-based side chain,
wherein
the monomer having the amine-based side chain in (a) to (g) is one or more selected from the group consisting of a monomer represented by Formula (3) and a monomer represented by Formula (4), and
the polymer having the amine-based side chain in (h) has one or more repeating units selected from the group consisting of a repeating unit represented by Formula (1) and a repeating unit represented by Formula (2): 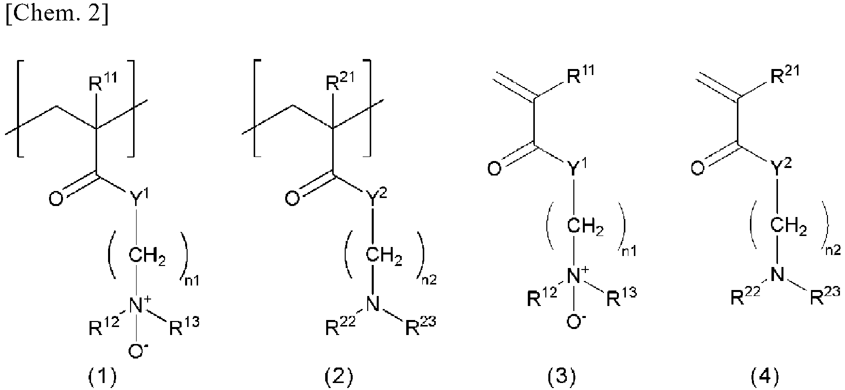
where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.

7. The method for producing a stationary phase for chromatography according to claim 6, wherein the support is a porous inorganic support or non-porous inorganic support.

8. A polymer having an amine-based side chain, the polymer comprising:
one or more repeating units selected from the group consisting of a repeating unit represented by Formula (1) and a repeating unit represented by Formula (2): 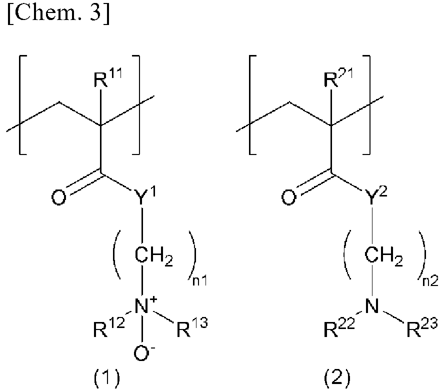
where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.

9. The polymer having the amine-based side chain according to claim 8, the polymer being used for a stationary phase for chromatography.

10. A method for producing a polymer having an amine-based side chain, the method comprising:
subjecting a monomer having an amine-based side chain to polymerization, wherein
the monomer having the amine-based side chain is one or more selected from the group consisting of a monomer represented by Formula (3) and a monomer represented by Formula (4): 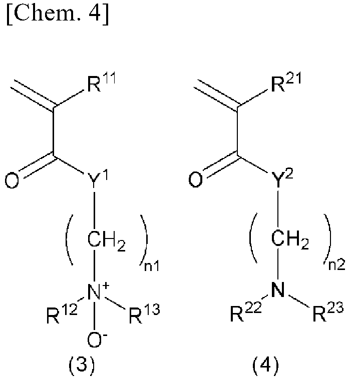
where R¹¹ and R²¹ each represent a hydrogen atom or a methyl group; R¹², R¹³, R²², and R²³ each represent a saturated aliphatic hydrocarbon group; Y¹ and Y² each represent an oxygen atom, NH, or NCH₃; and n1 and n2 each represent an integer from 1 to 8.

11. The method for producing a polymer having an amine-based side chain according to claim 10, wherein
the polymerization is atom transfer radical polymerization, free radical polymerization, or chain transfer polymerization.
